# EUROPEAN PATENT APPLICATION

(11) **EP 3 570 079 A1**
(43) Date of publication of application: **20.11.2019**
(21) Application number: 18739439.0
(22) Date of filing: 11.01.2018
(51) Int. Cl.: G02B 5/18, B32B 3/30, B32B 7/02, G02B 5/28

(54) **COLORING STRUCTURE, DISPLAY BODY, COLORING SHEET, MOLDING, AND METHOD FOR MANUFACTURING COLORING STRUCTURE**

(30) Priority: 11.01.2017 JP 2017002947; 07.07.2017 JP 2017133774; 16.11.2017 JP 2017220936
(71) Applicant: Toppan Printing Co., Ltd., Tokyo 110-0016 (JP)
(72) Inventor: YOSHIMURA, Mai, Tokyo 110-0016 (JP); SAKAI, Kyoko, Tokyo 110-0016 (JP); ICHIHARA, Yoko, Tokyo 110-0016 (JP); KAWASHITA, Masashi, Tokyo 110-0016 (JP); MINAMIKAWA, Naoki, Tokyo 110-0016 (JP)
(74) Representative: Plasseraud IP
(86) International application number: PCT/JP2018/000545
(87) International publication number: WO 2018/131665

(57) **Abstract**

A color developing structure comprises an uneven layer having an uneven structure on a surface thereof, a multilayer film layer positioned on the uneven structure and having a surface shape that follows the uneven structure, and a protective layer covering the surface of the multilayer film layer. Projections that constitute the uneven structure have a shape with one or more steps, a pattern constituted from projected images of the projections in a virtual plane on which the uneven structure is projected in the thickness direction of the uneven layer includes a pattern comprising a set of a plurality of rectangles in which a length along a second direction is equal to or greater than a length along a first direction, the length of the rectangles along the first direction is equal to or less than sub-wavelength, and in the plurality of rectangles, the standard deviation of the length along the second direction is greater than the standard deviation of the length along the first direction.

## Description

### [Technical Field]

The present invention relates to a color developing structure that develops a structural color, a display comprising the color developing structure, a color-producing sheet, a molding comprising the color-producing sheet, and a method for producing the color developing structure.

### [Background Art]

Structural colors that are often observed as the colors of naturally-occurring organisms, such as morpho butterfly, are visually recognized by the action of optical phenomena, such as diffraction, interference, and scattering of light, due to the fine structure of objects, unlike colors visually recognized due to electronic transition in molecules, such as colors developed by dyes.

For example, structural color due to multilayer film interference is generated in such a manner that in a multilayer film layer in which adjacent thin films have different refractive indices, light reflected on each interface of the multilayer film interferes. Multilayer film interference is one of the coloring principles of morpho butterfly wings. In morpho butterfly wings, vivid blue is visually recognized across a wide angular range as a result of the occurrence of scattering and diffraction of light due to the fine uneven structure on the surface of the wings, in addition to multilayer film interference.

As a structure that artificially reproduces structural color such as in morpho butterfly wings, there is a proposal for a structure in which a multilayer film layer is laminated on the surface of a substrate having unevenly arranged fine asperities, as described in PTL 1.

In a multilayer film layer, the wavelength of light enhanced by interference changes according to the optical path difference generated in each layer of the multilayer film layer, and the optical path difference is determined depending on the film thickness and refractive index of each layer. The emission direction of light enhanced by interference is limited to a specific direction that depends on the incident angle of incident light. Accordingly, with a structure in which a multilayer film layer is laminated on a flat surface, the wavelength of visually recognized reflected light changes greatly depending on the observation angle; thus, the visually recognized color changes greatly depending on the observation angle.

In contrast, with the structure of PTL 1, a multilayer film layer is laminated on irregular unevenness, and reflected light enhanced by interference spreads in multiple directions; thus, color changes depending on the observation angle become gentle. As a result, a structure is realized that develops a specific color across a wide angular range, as in morpho butterfly wings.

### [Citation List]

### [Patent Literature]

PTL 1: JP 2005-153192 A

### [Summary of the Invention]

### [Technical Problem]

In the structure described in PTL 1, the multilayer film layer has unevenness that follows the unevenness of the substrate, and that constitutes the surface of the structure. Accordingly, when physical or chemical damage is applied to the structure from the outside, the uneven structure of the multilayer film layer may be deformed or deteriorated. Further, the uneven structure may be clogged with dirt and foreign substances. When the uneven structure is modified in such a manner, the optical path length of light reflected on the multilayer film layer changes, and the effect of diffusing the reflected light in multiple directions is reduced; thus, desired coloring is less likely to be obtained in the structure.

An object of the present invention is to provide a color developing structure that can protect the uneven structure of a multilayer film layer, and to also provide a display, a color-producing sheet, a molding, and a method for producing the color developing structure.

### [Solution to Problem]

The color developing structure that solves the above problems comprises an uneven layer having an uneven structure on a surface thereof, and an optical functional layer containing a multilayer film layer positioned on the uneven structure and having a surface shape that follows the shape of the uneven structure, where layers adjacent in the multilayer film layer have different refractive indices, of incident light entering the multilayer film layer, the reflectance of light in a specific wavelength band is higher than the reflectance of light in wavelength bands other than the specific wavelength band, and an outermost layer of the optical functional layer on a side opposite to the uneven layer has a function to protect a layer lower than the outermost layer; wherein a first direction and a second direction orthogonal to the first direction are directions across a virtual plane that is a virtual surface on which the uneven structure is projected in the thickness direction of the uneven layer, projections that constitute the uneven structure have a shape with one or more steps, a pattern constituted from projected images of the projections in the virtual plane includes a pattern comprising a set of shape elements in which a length along the second direction is equal to or greater than a length along the first direction, the length of the shape elements along the first direction is equal to or less than sub-wavelength, and in the set of shape elements, the standard deviation of the length along the second direction is larger than the standard deviation of the length along the first direction.

With the above configuration, the lower layer is protected by the outermost layer of the optical functional layer; thus, the uneven structure of the multilayer film layer can be protected.

In the above color developing structure, the uneven layer may have light transmittance for the incident light, and a protective layer that covers the surface of the multilayer film layer as the outermost layer may have light absorption properties to absorb, of the incident light, at least part of light transmitted through the multilayer film layer.

With the above configuration, when the color developing structure is observed from the side on which the uneven layer is positioned, at least part of light transmitted through the multilayer film layer from the uneven layer side is absorbed by the protective layer, and the transmitted light is prevented from returning to the uneven layer side. Therefore, visual recognition of light in a wavelength band different from the reflected light from the multilayer film layer is suppressed; thus, a reduction in the visibility of color due to the reflected light is suppressed.

In the above color developing structure, the layers that constitute the color developing structure may include a layer containing an ultraviolet absorber. With the above configuration, the material that constitutes the color developing structure is prevented from being deteriorated by ultraviolet rays.

In the above color developing structure, a protective layer that covers the surface of the multilayer film layer as the outermost layer may be constituted from two or more layers. With the above configuration, it is possible to provide multiple functions to the protective layer or enhance the function of the protective layer by combining the functions of the layers that constitute the protective layer.

In the above color developing structure, the hardness measured from the outermost surface of the color developing structure may be 0.03 GPa or more. With the above configuration, the scratch resistance of the color developing structure is increased.

In the above color developing structure, the arithmetic average roughness of the outermost surface of the color developing structure may be 2 µm or less. With the above configuration, diffuse reflection of light on the outermost surface of the color developing structure can be suppressed; thus, a reduction in the visibility of color due to the reflected light from the multilayer film layer is suppressed.

In the above color developing structure, the water contact angle of the outermost surface of the color developing structure may be 60 degrees or more. With the above configuration, the color developing structure is prevented from being deteriorated by adhesion of water to the outermost surface.

In the above color developing structure, the pattern constituted from projected images of the projections in the virtual plane may be a pattern comprising the set of shape elements, and the height of the projections that constitute the uneven structure may be constant. With the above configuration, the projections that constitute the uneven structure provide an effect of diffusing reflected light, and light in a specific wavelength band is observed across a wide angular range as the reflected light from the multilayer film layer.

In the above color developing structure, a pattern constituted from projected images of the projections in the virtual plane may be a pattern in which a first pattern comprising the set of shape elements, and a second pattern comprising a plurality of band regions extending along the second direction and arranged along the first direction, are superimposed, the arrangement intervals of the band regions along the first direction may not be constant between the plurality of band regions, the average value of the arrangement intervals may be 1/2 or more of the minimum wavelength in wavelength bands contained in the incident light, and the projections that constitute the uneven structure may have a multi-step shape in which a projection element whose projected image in the virtual plane constitutes the first pattern and which has a predetermined height, and a projection element whose projected image in the virtual plane constitutes the second pattern and which has a predetermined height, are superimposed in the height direction.

With the above configuration, the projections provide an effect of diffusing reflected light and an effect of diffracting reflected light, light in a specific wavelength band can be observed across a wide angular range as the reflected light from the multilayer film layer, and the intensity of this reflected light is increased; thus, glossy and vivid color is visually recognized.

In the above color developing structure, the uneven layer may be configured to be able to be peeled from the multilayer film layer. With the above configuration, it is possible to peel the uneven layer from the color developing structure; thus, it is also possible to expand the application of the color developing structure.

The above color developing structure may further comprise an adhesion layer that covers a surface of the optical functional layer on a side opposite to the uneven layer. With the above configuration, it is possible to attach the color developing structure to an adherend.

The display that solves the above problems is a display comprising a plurality of display elements and having a front surface and a rear surface, wherein the display elements are each constituted from the above color developing structure. With the above configuration, a display in which the uneven structure of a multilayer film layer is protected is realized, and desired coloring is likely to be suitably obtained in the display.

The color-producing sheet that solves the above problems is a color-producing sheet constituted from the above color developing structure. With the above configuration, a color-producing sheet in which the uneven structure of a multilayer film layer is protected is realized, and desired coloring is likely to be suitably obtained in the color-producing sheet.

The molding that solves the above problems comprises the above color-producing sheet and an adherend to which the color-producing sheet is fixed, wherein the adherend is positioned on a side on which the optical functional layer is positioned with respect to the uneven layer. With the above configuration, the molding comprises a color-producing sheet in which the uneven structure of a multilayer film layer is protected; thus, desired coloring is likely to be suitably obtained in the color-producing sheet, and the decorativeness of the molding is enhanced.

The method for producing a color developing structure that solves the above problems comprises a step of transferring unevenness of an intaglio plate to a resin using a nanoimprint method to thereby form an uneven layer having an uneven structure on a surface thereof, and a step of forming an optical functional layer containing a multilayer film layer on the uneven structure, where layers adjacent in the multilayer film layer have different refractive indices, of incident light entering the multilayer film layer, the reflectance of light in a specific wavelength band is higher than the reflectance of light in wavelength bands other than the specific wavelength band, and an outermost layer of the optical functional layer on a side opposite to the uneven layer has a function to protect a layer lower than the outermost layer; wherein a first direction and a second direction orthogonal to the first direction are directions across a virtual plane that is a virtual surface in which the uneven structure is projected in the thickness direction of the uneven layer, in the step of forming the uneven layer, the uneven structure is formed so that a pattern constituted in the virtual plane from projected images of projections with one or more steps that constitute the uneven structure includes a pattern comprising a set of shape elements in which a length along the second direction is equal to or greater than a length along the first direction, the length of the shape elements along the first direction is equal to or less than sub-wavelength, and in the set of shape elements, the standard deviation of the length along the second direction is larger than the standard deviation of the length along the first direction.

With the above production method, in the production of a color developing structure comprising an optical functional layer having a protective function, the uneven structure of an uneven layer is formed using a nanoimprint method; thus, a fine uneven structure can be suitably and easily formed.

### [Advantageous Effects of the Invention]

According to the present invention, the uneven structure of a multilayer film layer provided in a color developing structure can be protected.

### [Brief Description of the Drawings]

Fig. 1 is a view showing the cross-sectional structure of a color developing structure having a first configuration according to an embodiment of the color developing structure.
Fig. 2A is a view showing the planar structure of the uneven structure in the first configuration.
Fig. 2B is a view showing the cross-sectional structure of the uneven structure in the first configuration.
Fig. 3 is a view showing the cross-sectional structure of a color developing structure having a second configuration.
Fig. 4A is a view showing the planar structure of an uneven structure comprising only a second projection element in the second configuration.
Fig. 4B is a view showing the cross-sectional structure of the uneven structure comprising only a second projection element in the second configuration.
Fig. 5A is a view showing the planar structure of the uneven structure in the second configuration.
Fig. 5B is a view showing the cross-sectional structure of the uneven structure in the second configuration.
Fig. 6 is a view showing the cross-sectional structure of a color developing structure of a modified example according to an embodiment of the color developing structure.
Fig. 7 is a view showing the planar structure of a display according to an embodiment of the display.
Fig. 8 is a view showing the cross-sectional structure of a display according to an embodiment of the display.
Fig. 9 is a view showing the cross-sectional structure of a color-producing sheet according to an embodiment of the color-producing sheet.
Fig. 10 is a view showing the cross-sectional structure of a molding according to an embodiment of the molding.
Fig. 11 is a view showing the cross-sectional structure of a transfer foil according to an embodiment of the transfer foil.
Fig. 12 is a diagram schematically showing a transfer foil attached to an adherend.
Fig. 13 is a diagram schematically showing a molding, which is an adherend to which a color-producing sheet is transferred.
Fig. 14 is a view showing the cross-sectional structure of a transferred color-producing sheet.
Fig. 15 is a view showing the cross-sectional structure of a transferred color-producing sheet in another example.
Fig. 16 is a view showing the cross-sectional structure of a transfer foil according to another embodiment of the transfer foil.
Fig. 17 is a view showing the cross-sectional structure of a color-producing sheet in a transfer foil according to another embodiment.

### [Description of Embodiments]

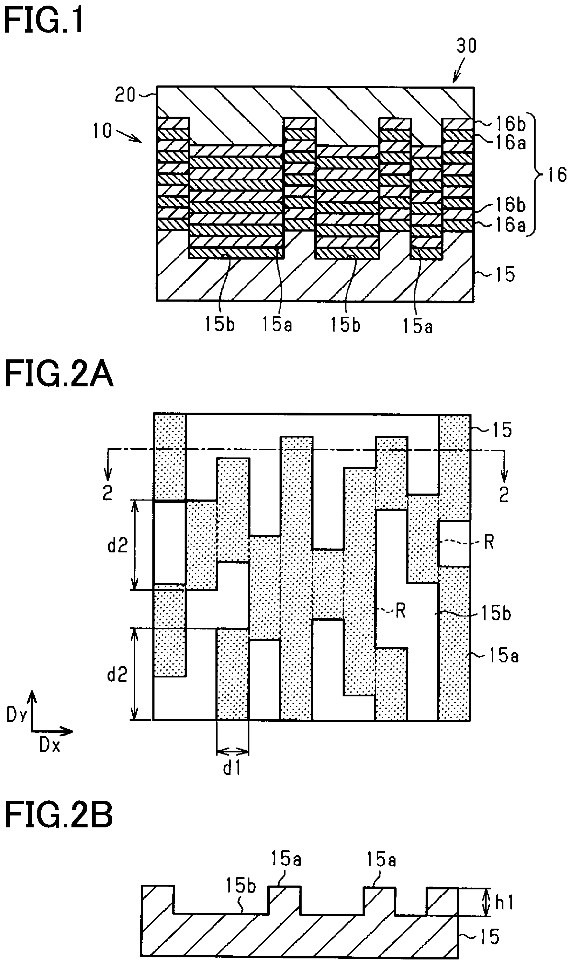

Embodiments of a color developing structure, a display, a color-producing sheet, a molding, and a method for producing the color developing structure are described with reference to Figs. 1 to 10.

### [Color Developing Structure]

The color developing structure of the present embodiment comprises an uneven structure having a multilayer film layer, and a protective layer covering the surface of the multilayer film layer in the uneven structure. As the uneven structure of the uneven structure, a first configuration and a second configuration both can be applied. First, each of these two configurations is described.

The wavelength bands of incident light and reflected light with respect to the color developing structure are not limited. The following description describes, as an example, a color developing structure intended for light in the visible range. In the present embodiment, light in a wavelength band of 360 nm or more and 830 nm or less is light in the visible range.

Fig. 1 shows a color developing structure 30 comprising an uneven structure 10 having the first configuration, and a protective layer 20.

### <First Configuration>

The uneven structure 10 comprises a substrate 15 and a multilayer film layer 16. The substrate 15 is formed from a material that transmits light in the visible range, and is an example of the uneven layer having an uneven structure on the surface thereof. The multilayer film layer 16 is laminated on the surface of the substrate 15. That is, the multilayer film layer 16 covers a surface of the substrate 15 on which unevenness is formed. The uneven structure of the substrate 15 is constituted from a plurality of projections 15a and recesses 15b that are regions between the plurality of projections 15a. The projections 15a have an irregular length and extend in an approximately band shape.

The multilayer film layer 16 has a configuration in which high refractive index layers 16a and low refractive index layers 16b are alternately laminated. The refractive index of the high refractive index layer 16a is higher than the refractive index of the low refractive index layer 16b. For example, the high refractive index layer 16a is in contact with the surface of the substrate 15, and the low refractive index layer 16b constitutes the surface of the multilayer film layer 16 on the side opposite to the substrate 15.

On the projections 15a in the substrate 15 and on the recesses 15b in the substrate 15, the structures of the multilayer film layer 16, i.e., the material, film thickness, and lamination order of each layer that constitutes the multilayer film layer 16, conform with each other. The front surface of the multilayer film layer 16 on the side opposite to the surface (rear surface) in contact with the substrate 15 has a surface shape that follows the uneven structure of the substrate 15. The surface shape has unevenness arranged corresponding to the arrangement of unevenness formed on the substrate 15. The protective layer 20 covers the front surface of the multilayer film layer 16. The protective layer 20 and the multilayer film layer 16 constitute an optical functional layer.

In such a configuration, when light enters the color developing structure 30 from the side opposite to the multilayer film layer 16 side with respect to the protective layer 20, light rays reflected on each interface between the high refractive index layer 16a and the low refractive index layer 16b in the multilayer film layer 16 interfere with each other, and change their traveling directions due to the irregular unevenness on the surface of the multilayer film layer 16. As a result, light in a specific wavelength band is emitted across a wide angular range. The specific wavelength band strongly emitted as the reflected light is determined by the materials and film thickness of the high refractive index layer 16a and the low refractive index layer 16b, and the width, height, and arrangement of the projections 15a.

Because the front surface of the multilayer film layer 16 is covered with the protective layer 20, modification of the uneven structure of the multilayer film layer 16, specifically deformation of the uneven structure and clogging of the uneven structure with dirt and foreign substances, is suppressed.

The surface (rear surface) of the multilayer film layer 16 in contact with the substrate 15 also has the same unevenness as that on the front surface of the multilayer film layer 16. Therefore, when light enters the color developing structure 30 from the side opposite to the multilayer film layer 16 side with respect to the substrate 15, reflected light in a specific wavelength band is similarly emitted across a wide angular range. That is, the color developing structure 30 may be observed from the side opposite to the multilayer film layer 16 side with respect to the protective layer 20, and from the side opposite to the multilayer film layer 16 side with respect to the substrate 15.

The details of the uneven structure of the substrate 15, which is an uneven layer, are described with reference to Fig. 2. Fig. 2 (a) is a plan view of the substrate 15 viewed from the direction facing the surface of the substrate 15, and Fig. 2 (b) is a cross-sectional view showing the cross-sectional structure of the substrate 15 taken along the line 2-2 of Fig. 2 (a). In Fig. 2 (a), the surface of the projections 15a that constitute the uneven structure are shown dotted.

As shown in Fig. 2 (a), the first direction Dx and the second direction Dy are directions contained in a virtual plane. The virtual plane is a virtual surface on which the uneven structure (boundary between the projection 15a and the recess 15b) is projected in the thickness direction of the substrate 15. The first direction Dx and the second direction Dy are orthogonal to each other. The virtual plane is a surface along the spreading direction of the substrate 15, and is a surface orthogonal to the thickness direction of the substrate 15.

In the virtual plane, a pattern constituted from the projected images of the projections 15a is a pattern in which a plurality of rectangles R illustrated by the broken line are gathered. The rectangle R is an example of shape elements. The rectangle R has a shape extending in the second direction Dy. In the rectangle R, the length d2 in the second direction Dy is equal to or greater than the length d1 in the first direction Dx. As an example, the rectangles R are each arranged so that they do not overlap with other rectangles R in either of the first direction Dx and the second direction Dy.

In the plurality of rectangles R, the length d1 in the first direction Dx is constant. The plurality of rectangles R are arranged in the first direction Dx at arrangement intervals of the length d1; that is, the rectangles R are arranged with a period of length d1.

In contrast, in the plurality of rectangles R, the length d2 in the second direction Dy is irregular, and the length d2 of each rectangle R is a value selected from a population having a predetermined standard deviation. This population preferably follows a normal distribution.

A pattern comprising a plurality of rectangles R is set, for example, in the following manner. For example, a plurality of rectangles R having a length d2 distributed with a predetermined standard deviation are temporarily spread in a predetermined region. Subsequently, the presence/absence of arrangement of each temporarily spread rectangle R is determined according to a certain probability. Then, a region in which the rectangle R is actually arranged, and a region in which the rectangle R is not actually arranged are set. In order to efficiently scatter the reflected light from the multilayer film layer 16, the length d2 preferably has a distribution with an average value of 4.15 µm or less and a standard deviation of 1 µm or less.

The region in which the rectangle R is arranged is a region in which the projection 15a is arranged. When adjacent rectangles R are in contact with each other, one projection 15a is arranged in one region obtained by connecting the regions in which each rectangle R is arranged. In such a configuration, the length of the projection 15a in the first direction Dx is an integral multiple of the length d1 of the rectangle R.

In order to prevent the occurrence of rainbow color light due to the dispersion of light by the unevenness, the length d1 of the rectangle R in the first direction Dx is set to be equal to or less than the wavelength of light in the visible range. In other words, the length d1 is equal to or less than sub-wavelength, i.e., a length equal to or less than the wavelength band of incident light. Specifically, the length d1 is preferably 830 nm or less, and more preferably 700 nm or less.

Further, the length d1 is preferably less than the peak wavelength of light in the above specific wavelength band reflected from the multilayer film layer 16. For example, when the color developing structure 30 is allowed to develop a blue color, the length d1 is preferably about 300 nm. When the color developing structure 30 is allowed to develop a green color, the length d1 is preferably about 400 nm. When the color developing structure 30 is allowed to develop a red color, the length d1 is preferably about 460 nm.

In order to increase the spatial spread of the reflected light from the multilayer film layer 16, that is, in order to enhance the effect of scattering the reflected light, the uneven structure preferably has many convexities and concavities. The ratio of the area of the projections 15a per unit area when viewed from the direction facing the surface of the substrate 15 is preferably 40% or more and 60% or less. For example, when viewed from the direction facing the surface of the substrate 15, the ratio of the area of the projections 15a to the area of the recesses 15b per unit area is preferably 1:1.

As shown in Fig. 2 (b), the height h1 of each projection 15a is constant. The height of the projection 15a may be set depending on the desired color to be developed by the color developing structure 30, i.e., the wavelength band of light desirably reflected from the color developing structure 30. An effect of scattering reflected light is obtained when the height h1 of the projections 15a is larger than the surface roughness of the multilayer film layer 16 on the projections 15a and recesses 15b.

However, in order to suppress the interference of light caused by reflection on the unevenness of the surface of the multilayer film layer 16, the height h1 is preferably equal to or less than 1/2 of the wavelength of light in the visible range; that is, the height h1 is preferably 415 nm or less. Furthermore, in order to suppress the interference of light described above, the height h1 is more preferably equal to or less than 1/2 of the peak wavelength of light in the above specific wavelength band reflected from the multilayer film layer 16.

Moreover, if the height h1 is excessively large, the effect of scattering reflected light increases too much, and the intensity of the reflected light is likely to become low. Accordingly, when the reflected light is light in the visible range, the height h1 is preferably 10 nm or more and 200 nm or less. For example, in a color developing structure 30 that develops blue, the height h1 is preferably about 40 nm or more and 150 nm or less in order to obtain effective light spread, and the height h1 is preferably about 100 nm or less in order to suppress the scattering effect from increasing too much.

The rectangles R can also be arranged so that parts of two rectangles R adjacent to each other in the first direction Dx overlap each other to constitute a pattern of the projections 15a in the virtual plane. That is, the plurality of rectangles R may be arranged in the first direction Dx at arrangement intervals less than the length d1, and the arrangement intervals of the rectangles R may not be constant. In regions corresponding to the overlapping rectangles R, one projection 15a is positioned in one region obtained by connecting regions in which each rectangle R is arranged. In this case, the length of the projections 15a in the first direction Dx is different from an integral multiple of the length d1 of the rectangle R. Moreover, the length d1 of the rectangles R may not be constant. It is only necessary that in each rectangle R, the length d2 is equal to or greater than the length d1, and that the standard deviation of the length d2 of the plurality of rectangles R is larger than the standard deviation of the length d1 of the plurality of rectangles R. An effect of scattering reflected light can also be obtained in such a configuration.

### <Second Configuration>

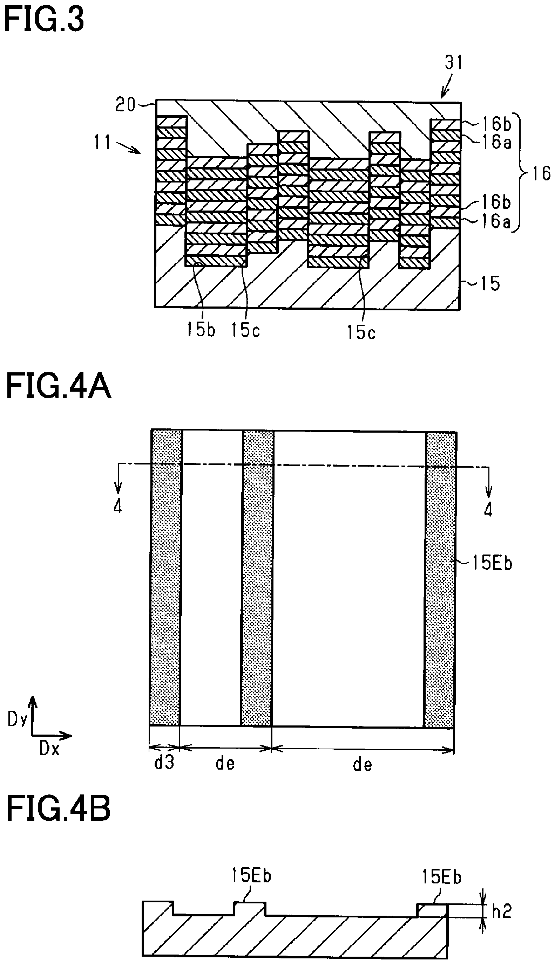

Fig. 3 shows a color developing structure 31 comprising an uneven structure 11 having the second configuration, and a protective layer 20.

Compared with the uneven structure 10 having the first configuration, in the uneven structure 11 having the second configuration, the configuration of the uneven structure in the substrate 15, i.e., the configuration of the uneven structure on the surface of the multilayer film layer 16, is different. Other than the configuration of the uneven structure, the uneven structure 11 has the same configuration as the uneven structure 10 having the first configuration described above. In the following, the color developing structure 31 is described mainly based on the differences from the above color developing structure 30. The same sign is assigned to the same configuration as the color developing structure 30, and the description thereof is omitted.

Projections 15c that constitute the uneven structure of the substrate 15 in the uneven structure 11 have a configuration in which a first projection element that has the same structure as the projection 15a in the first configuration, and a second projection element extending in a band shape are superimposed in the thickness direction of the substrate 15.

According to the color developing structure 30 with the first configuration, changes in the visually recognized color depending on the observation angle become gentle due to the effect of scattering reflected light; however, the vividness of the visually recognized color is reduced due to a decrease in the intensity of the reflected light caused by scattering. Depending on the application etc., of the color developing structure, a structure that allows observation of more vivid color across a wide angular range is required in some cases. In the second configuration, the second projection element is arranged so that incident light is strongly diffracted in a specific direction, and a color developing structure 31 is realized that allows observation of more vivid color across a wide angular range due to the light scattering effect of the first projection element and the light diffraction effect of the second projection element.

The configuration of the second projection element is described with reference to Fig. 4. Fig. 4 (a) is a plan view of an uneven structure comprising only a second projection element, and Fig. 4 (b) is a cross-sectional view showing a cross-sectional structure taken along the line 4-4 of Fig. 4 (a). In Fig. 4 (a), the surface of the second projection element is shown dotted.

As shown in Fig. 4 (a), in a plan view, i.e., in the above virtual plane, the second projection element 15Eb has a band shape extending with a constant width along the second direction Dy, and a plurality of second projection elements 15Eb are arranged at intervals along the first direction Dx. In other words, the pattern constituted from the projected images of the second projection elements 15Eb in the virtual plane is a pattern comprising a plurality of band regions that extend along the second direction Dy and that are arranged along the first direction Dx. The length d3 of the second projection element 15Eb in the first direction Dx may be the same or different from the length d1 of the above rectangle R that determines the pattern of the first projection element.

The arrangement intervals de of the second projection elements 15Eb in the first direction Dx, i.e., the arrangement intervals of the band regions in the first direction Dx, are set so that at least part of the reflected light on the surface of the uneven structure constituted from the second projection elements 15Eb is observed as primary diffracted light. The primary diffracted light is diffracted light in which the diffraction order m is 1 or -1.

That is, when the incident angle of the incident light with respect to the second projection element 15Eb is regarded as θ, the reflection angle of the reflected light from the second projection element 15Eb is regarded as φ, and the wavelength of the diffracted light is regarded as λ, the arrangement interval de satisfies de ≥ λ/(sinθ + sinφ). For example, when visible light in which λ = 360 nm is targeted, the arrangement intervals de of the second projection elements 15Eb may be 180 nm or more; that is, the arrangement intervals de may be 1/2 or more of the minimum wavelength in wavelength bands contained in the incident light. The arrangement interval de is the distance between the edges of two adjacent second projection elements 15Eb along the first direction Dx. The edges of two adjacent second projection elements 15Eb are positioned on the same side in the first direction Dx with respect to each second projection element 15Eb (right side in the drawing).

The periodicity of the pattern constituted from the second projection elements 15Eb is reflected by the periodicity of the uneven structure of the substrate 15, i.e., the periodicity of the uneven structure on the surface of the multilayer film layer 16. When the arrangement intervals de of the plurality of second projection elements 15Eb are constant, reflected light of a specific wavelength is emitted at a specific angle from the multilayer film layer 16 due to the diffraction phenomenon on the surface of the multilayer film layer 16. The reflection intensity of light by diffraction is much higher than the reflection intensity of reflected light generated due to the light scattering effect of the first projection element described in the above first configuration. Therefore, light having brightness, such as metallic luster, is visually recognized; however, in contrast, light is dispersed by diffraction, and the visually recognized color varies depending on the change in the observation angle.

Therefore, for example, when the first projection elements are arranged so that a color developing structure 31 that develops blue is obtained, if the arrangement intervals de of the second projection elements 15Eb are a constant value of 400 nm or more and 5 µm or less, strong green to red light due to surface reflection may be observed due to diffraction depending on the observation angle. In contrast, for example, when the arrangement intervals de of the second projection elements 15Eb are as large as about 50 µm, the range of the angle in which light in the visible range is diffracted becomes narrow; thus, color changes caused by diffraction are less likely to be visually recognized; however, light having brightness, such as metallic luster, is observed only at a specific observation angle.

In this respect, in a configuration in which the arrangement intervals de are not a constant value, that is, when the pattern of the second projection elements 15Eb is a pattern in which a plurality of periodic structures having different periods are superimposed, the reflected light due to diffraction is mixed with lights in a plurality of wavelengths; thus, dispersed highly monochromatic light is less likely to be visually recognized. Then, glossy and vivid color is observed across a wide angular range. In this case, the arrangement intervals de are selected from, for example, a range of 360 nm or more and 5 µm or less. The average value of the arrangement intervals de of the plurality of second projection elements 15Eb may be 1/2 or more of the minimum wavelength in wavelength bands contained in the incident light.

As the standard deviation of the arrangement intervals de increases, the arrangement of the second projection elements 15Eb becomes irregular, and the scattering effect becomes dominant; thus, strong reflection by diffraction is less likely to be obtained. Accordingly, the arrangement intervals de of the second projection elements 15Eb are preferably determined based on the angle at which light spreads due to the light scattering effect of the first projection elements so that reflected light due to diffraction is emitted within a range to the same extent as the range in which this light spreads. For example, when blue reflected light is emitted while spreading within a range of ±40° with respect to the incident angle, the average value of the arrangement intervals de in the pattern of the second projection elements 15Eb is about 1 µm or more and 5 µm or less, and the standard deviation is about 1 µm. Reflected light due to diffraction is thereby generated at an angle similar to the angle at which light spreads due to the light scattering effect of the first projection elements.

That is, unlike a configuration for extracting light in a specific wavelength band after diffraction, the configuration comprising a plurality of second projection elements 15Eb is a configuration for allowing light in various wavelength bands to be emitted within a predetermined angular range using diffraction due to dispersion of the arrangement intervals de.

Further, in order to generate a longer-term diffraction phenomenon, a square region with one side of 10 µm or more and 100 µm or less is used as a unit region, and in the pattern of the second projection elements 15Eb per unit region, the average value of the arrangement intervals de may be set to about 1 µm or more and 5 µm or less, and the standard deviation may be set to about 1 µm. A plurality of unit regions may include a region in which the arrangement intervals de are a constant value contained within a range of 1 µm or more and 5 µm or less. Even if there is a unit region in which the arrangement intervals de are constant, when the arrangement intervals de have variation with a standard deviation of about 1 µm in either of other unit regions adjacent to this unit region, an effect equivalent to that of a configuration in which the arrangement intervals de have variation in all the unit regions is expected within the resolution of human eyes.

The second projection elements 15Eb shown in Fig. 4 have periodicity associated with the arrangement intervals de only in the first direction Dx. The light scattering effect of the first projection elements mainly acts on the reflected light in a direction along the first direction Dx when viewed from the direction facing the surface of the substrate 15, but can also partially affect the reflected light in a direction along the second direction Dy. Therefore, the second projection elements 15Eb may also have periodicity in the second direction Dy. That is, the pattern of the second projection elements 15Eb may be a pattern in which a plurality of band regions extending in the second direction Dy are arranged along each of the first direction Dx and the second direction Dy.

In such a pattern of the second projection elements 15Eb, for example, the arrangement intervals of the band regions along the first direction Dx and the arrangement intervals of the band regions along the second direction Dy each may have variation so that the average value of the arrangement intervals is 1 µm or more and 100 µm or less.

Moreover, depending on the difference between the influence the light scattering effect of the first projection elements on the first direction Dx and the influence of the light scattering effect of the first projection elements on the second direction Dy, the average value of the arrangement intervals along the first direction Dx and the average value of the arrangement intervals along the second direction Dy may be different from each other. Furthermore, depending on the difference between the influence of the light scattering effect of the first projection elements on the first direction Dx and the influence of the light scattering effect of the first projection elements on the second direction Dy, the standard deviation of the arrangement intervals along the first direction Dx and the standard deviation of the arrangement intervals along the second direction Dy may be different from each other.

As shown in Fig. 4 (b), the height h2 of the second projection elements 15Eb may be larger than the surface roughness of the multilayer film layer 16 on the projections 15c and the recesses 15b. However, as the height h2 increases, the diffraction effect of the second projection elements 15Eb becomes dominant in the effect of the uneven structure on the reflected light, and the light scattering effect of the first projection elements is less likely to be obtained. Accordingly, the height h2 is preferably similar to the height h1 of the first projection elements, and the height h2 may be the same as the height h1. For example, the height h1 of the first projection elements and the height h2 of the second projection elements 15Eb are preferably contained in a range of 10 nm or more and 200 nm or less. In a color developing structure 31 that develops blue, the height h1 of the first projection elements and the height h2 of the second projection elements 15Eb are preferably contained in a range of 10 nm or more and 150 nm or less.

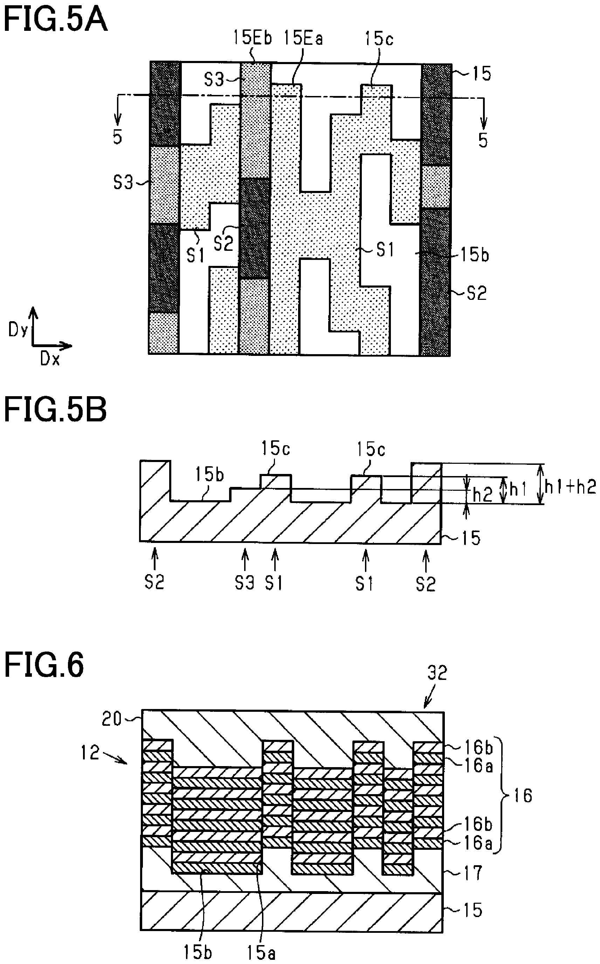

The details of the uneven structure of the uneven structure 11 with the second configuration are described with reference to Fig. 5. Fig. 5 (a) is a plan view of the substrate 15 viewed from the direction facing the surface of the substrate 15, and Fig. 5 (b) is a cross-sectional view showing the cross-sectional structure of the substrate 15 taken along the line 5-5 of Fig. 5 (a). In Fig. 5 (a), a pattern constituted from the first projection elements is shown dotted, and a pattern constituted from the second projection elements is shown dotted with a density different from the pattern constituted from the first projection elements.

As shown in Fig. 5 (a), the pattern constituted from the projected images of the projections 15c in the above virtual plane is a pattern in which a first pattern that is a pattern constituted from the projected images of the first projection elements 15Ea, and a second pattern that is a pattern constituted from the projected images of the second projection elements 15Eb, are superimposed. That is, the regions in which the projections 15c are positioned include a region S1 constituted from only the first projection element 15Ea, a region S2 in which the first projection element 15Ea and the second projection element 15Eb are superimposed, and a region S3 constituted from only the second projection element 15Eb. In Fig. 5, the first projection element 15Ea and the second projection element 15Eb are superimposed so that their edges are aligned with each other in the first direction Dx; however, they are not limited to such a configuration, and the edge of the first projection element 15Ea and the edge of second projection element 15Eb may not be aligned with each other.

As shown in Fig. 5 (b), in the region S1, the height of the projection 15c is the height h1 of the first projection element 15Ea. In the region S2, the height of the projection 15c is the sum of the height h1 of the first projection element 15Ea and the height h2 of the second projection element 15Eb. In the region S3, the height of the projection 15c is the height h2 of the second projection element 15Eb. Thus, the projection 15c has a multi-step shape in which the first projection element 15Ea and the second projection element 15Eb are superimposed in the height direction. The first projection element 15Ea has a predetermined height h1, and a projected image of the first projection element 15Ea in the virtual plane constitutes a first pattern. The second projection element 15Eb has a predetermined height h2, and a projected image of the second projection element 15Eb in the virtual plane constitutes a second pattern. The projection 15c can also be regarded as a configuration in which the second projection element 15Eb is superimposed on the first projection element 15Ea, or as a configuration in which the first projection element 15Ea is superimposed on the second projection element 15Eb.

In such a configuration, the uneven structure on the surface of the multilayer film layer 16 is more complicated than the first configuration; thus, the uneven structure is likely to be deformed. Therefore, it is highly beneficial to protect the uneven structure of the multilayer film layer 16 by the protective layer 20.

As described above, according to the color developing structure 31 having the second configuration, color is visually recognized due to the synergy of a light diffusion phenomenon resulting from the portion constituted from the first projection elements 15Ea in the projections 15c, and a light diffraction phenomenon resulting from the portion constituted from the second projection elements 15Eb in the projections 15c. That is, according to the color developing structure 31 having the second configuration, reflected light in a specific wavelength band can be observed across a wide angular range, and the intensity of this reflected light is increased; thus, glossy and vivid color is visually recognized. In other words, in the second configuration, the projection 15c, which is one structure, has two functions, a light diffusion function and a light diffraction function.

In the virtual plane, the pattern constituted from the first projection elements 15Ea and the pattern constituted from the second projection elements 15Eb may be arranged so that the first projection element 15Ea and the second projection element 15Eb are not superimposed. With such a configuration, the light diffusion effect of the first projection elements 15Ea and the light diffraction effect of the second projection elements 15Eb can also be obtained. However, when the first projection element 15Ea and the second projection element 15Eb are arranged so that they are not superimposed, the area in which the first projection element 15Ea can be arranged per unit area is reduced, and the light diffusion effect is reduced, as compared with the first configuration. Therefore, in order to enhance the diffusion effect and diffraction effect of light by the projection elements 15Ea and 15Eb, it is preferable that the projection 15c has a multi-step shape in which the first projection element 15Ea and the second projection element 15Eb are superimposed, as shown in Fig. 5.

### [Method for Producing Color Developing Structure]

The material of each layer that constitutes the color developing structures 30 and 31, and the method for producing the color developing structures 30 and 31 are described.

The substrate 15 is made of a material that has light transmittance for light in the visible range, i.e., a material that is transparent to light in the visible range. Usable examples of the substrate 15 include synthetic quartz substrates and films made of resins, such as polyethylene terephthalate (PET). The uneven structure of the surface of the substrate 15 is formed, for example, using a known ultra-fine processing technology, such as lithography that applies light or a charged particle beam, or dry etching.

The uneven structure of the second configuration is formed by, for example, sequentially performing etching using a resist pattern of the above first pattern, and etching using a resist pattern of the above second pattern. In this case, either of etching of the first pattern and etching of the second pattern may be performed first. That is, either of the first projection element 15Ea and the second projection element 15Eb may be formed first.

The high refractive index layer 16a and the low refractive index layer 16b that constitute the multilayer film layer 16 are made of materials that have light transmittance for light in the visible range, i.e., materials that are transparent to light in the visible range. The materials of these layers are not limited, as long as the refractive index of the high refractive index layer 16a is higher than the refractive index of the low refractive index layer 16b; however, the larger the difference in the refractive index between the high refractive index layer 16a and the low refractive index layer 16b, the fewer the number of laminations are required to obtain a high intensity of reflected light. From such a viewpoint, for example, when the high refractive index layer 16a and the low refractive index layer 16b are made of inorganic materials, it is preferable that the high refractive index layer 16a is made of titanium dioxide (TiO₂), and that the low refractive index layer 16b is made of silicon dioxide (SiO₂). The high refractive index layer 16a and low refractive index layer 16b made of such inorganic materials are each formed using a known thin film coating technology, such as sputtering, vacuum deposition, or an atomic layer deposition method. Moreover, each of the high refractive index layer 16a and the low refractive index layer 16b may be made of an organic material. In this case, a known technique, such as self-organization, may be used to form the high refractive index layer 16a and the low refractive index layer 16b.

The film thickness of the high refractive index layer 16a and the low refractive index layer 16b may be designed using a transfer matrix method or the like, depending on the desired color to be developed by the color developing structures 30 and 31. For example, when color developing structures 30 and 31 that develop blue are formed, the high refractive index layer 16a made of TiO₂ preferably has a film thickness of about 40 nm, and the low refractive index layer 16b made of SiO₂ preferably has a film thickness of about 75 nm.

Figs. 1 and 3 show examples of the multilayer film layer 16 that comprises 10 layers in which the high refractive index layers 16a and the low refractive index layers 16b are alternately laminated in this order from the position close to the substrate 15; however, the number of layers provided in the multilayer film layer 16, and the order of lamination are not limited thereto, and layers may be laminated so that reflected light in a desired wavelength band is obtained. For example, the low refractive index layer 16b may be in contact with the surface of the substrate 15, and the high refractive index layers 16a and the low refractive index layers 16b may be alternately laminated thereon. Moreover, the layer that constitutes the uppermost surface of the multilayer film layer 16, which is the surface on the side opposite to the substrate 15, may be either of the high refractive index layer 16a and the low refractive index layer 16b. Further, the material that constitutes the layer in contact with the surface of the substrate 15 may be the same as the material that constitutes the layer constituting the above uppermost surface, as long as the low refractive index layers 16b and the high refractive index layers 16a are alternately laminated. Furthermore, the multilayer film layer 16 may be a combination of three or more different layers, and each layer may have a different refractive index.

In short, the multilayer film layer 16 may be configured so that adjacent layers have different refractive indices, and so that, of the incident light entering the multilayer film layer 16, the reflectance of light in a specific wavelength band is higher than the reflectance of light in other wavelength bands.

When the color developing structures 30 and 31 are observed from the side on which the protective layer 20 is positioned, the protective layer 20 is made of a material that has light transmittance for light in the visible range, i.e., a material that is transparent to light in the visible range. Usable examples of such materials include polyesters, such as an acrylic, polyethylene terephthalate, and polyethylene naphthalate; polyolefins, such as polypropylene and polyethylene; and resins, such as polyvinyl chloride, polycarbonate, polyvinyl alcohol, polystyrene, and polyamide.

The uneven structures 10 and 11 are made of materials that are transparent to light in the visible range. Accordingly, of the wavelength bands contained in the incident light, part of light in wavelength bands other than the specific wavelength band reflected on the multilayer film layer 16 is transmitted through the multilayer film layer 16, and also through the uneven structures 10 and 11. When the uneven structures 10 and 11 are observed from one side of their front and rear surfaces, if a light source or a structure that reflects the transmitted light, such as a white plate, is present on the other side of the uneven structures 10 and 11, transmitted light transmitted though the multilayer film layer 16 from the other side is visually recognized on the one side, together with the reflected light in a specific wavelength band from the multilayer film layer 16. As described above, the wavelength band of this transmitted light is different from the wavelength band of the reflected light, and the color of the transmitted light is mainly a complementary color of the color of the reflected light. Accordingly, when such transmitted light is visually recognized, the visibility of color due to the reflected light is reduced.

Therefore, in terms of suppressing a reduction in the visibility of color due to the reflected light caused by the protective layer 20, it is preferable that the protective layer 20 is made of a material that absorbs the transmitted light transmitted through the multilayer film layer 16. In this case, the color developing structures 30 and 31 are used in an embodiment in which they are observed from the side opposite to the multilayer film layer 16 side with respect to the substrate 15. According to such a configuration, light transmitted through the multilayer film layer 16 from the substrate 15 side with respect to the multilayer film layer 16 is absorbed by the protective layer 20, and the transmitted light is prevented from returning to the substrate 15 side with respect to the multilayer film layer 16. Accordingly, when the color developing structures 30 and 31 are observed from the side opposite to the multilayer film layer 16 side with respect to the substrate 15, visual recognition of light in a wavelength band different from the reflected light from the multilayer film layer 16 is suppressed. Therefore, a reduction in the visibility of color due to the reflected light caused by the protective layer 20 is suppressed, and desired coloring is suitably obtained in the color developing structures 30 and 31.

For example, the protective layer 20 may be a layer containing a material that absorbs light in the visible range, such as a light absorber or a black pigment. Specifically, the protective layer 20 is preferably a layer obtained by mixing a black inorganic pigment, such as carbon black, titanium black, black iron oxide, or black composite oxide, with a resin.

When the protective layer 20 is configured to have light absorption properties to absorb at least part of light transmitted through the multilayer film layer 16, without absorbing all the light in the visible range, an effect of suppressing a reduction in the visibility of color due to the reflected light caused by the protective layer 20 is obtained, compared with a configuration in which a layer having such light absorption properties is not provided. Accordingly, the protective layer 20 may be a layer containing a pigment of color depending on the wavelength band of light transmitted through the multilayer film layer 16. When the protective layer 20 is a black layer containing a black pigment, it is not necessary to, for example, control the color of the protective layer 20 depending on the wavelength band of the transmitted light. Moreover, because the protective layer 20 absorbs light in a wide wavelength band, a reduction in the visibility of color due to the reflected light is easily and suitably suppressed.

The protective layer 20 may contain an ultraviolet absorber. Usable examples of ultraviolet absorbers include benzophenone-based ultraviolet absorbers, benzotriazole-based ultraviolet absorbers, benzoate-based ultraviolet absorbers, salicylate-based ultraviolet absorbers, triazine-based ultraviolet absorbers, cyanoacrylate-based ultraviolet absorbers, and like known ultraviolet absorbers.

When the protective layer 20 is configured to contain an ultraviolet absorber, the protective layer 20 continuously absorbs ultraviolet rays when the color developing structures 30 and 31 are exposed to ultraviolet rays in direct sunlight etc. for a long period of time. Accordingly, the materials that constitute the color developing structures 30 and 31 are prevented from being deteriorated by ultraviolet rays. Such an effect is obtained at a high level particularly when the color developing structures 30 and 31 are observed from the side opposite to the multilayer film layer 16 side with respect to the protective layer 20, that is, when the color developing structures 30 and 31 are used in an embodiment in which incident light enters the color developing structures 30 and 31 from the side opposite to the multilayer film layer 16 side with respect to the protective layer 20.

The protective layer 20 is formed on the surface of the multilayer film layer 16 using a known coating method, such as an ink jet method, a spray method, a bar coating method, a roll coating method, a slit coating method, or a gravure coating method. The film thickness of the protective layer 20 is not limited, but is preferably about 1 µm or more and 100 µm or less, for example.

Ink that is a coating liquid for forming the protective layer 20 may be mixed with a solvent, if necessary. As the solvent, a solvent that is compatible with the resin that constitutes the protective layer 20 is selected. Examples of solvents include ethyl acetate, butyl acetate, ethylene glycol monomethyl ether, toluene, xylene, methylcyclohexane, ethylcyclohexane, acetone, methyl ethyl ketone, methyl isobutyl ketone, diisobutyl ketone, and the like.

The protective layer 20 may be constituted from a plurality of layers. For example, when the protective layer 20 is configured to comprise a plurality of layers each having a different resistance to physical or chemical stimuli, a protective layer 20 having a plurality of resistances can be realized. Moreover, for example, when the protective layer 20 is configured to comprise a plurality of layers each having a similar resistance, the above resistances common in the plurality of layers can be enhanced in the protective layer 20. Examples of such resistances include scratch resistance, water resistance, and the like.

### [Characteristics of Protective Layer]

Some examples of the various characteristics of the protective layer 20 are shown below. The following form exhibits a particularly high effect when the color developing structures 30 and 31 are used in an embodiment in which the protective layer 20 is exposed to outdoor air as the outermost surface of the color developing structures 30 and 31, for example, when the color developing structures 30 and 31 are observed from the side opposite to the multilayer film layer 16 side with respect to the protective layer 20. In the following, the surface of the protective layer 20 is a surface on the side opposite to the surface of the protective layer 20 in contact with the multilayer film layer 16, and is a surface that constitutes the outermost surface of the color developing structures 30 and 31.

In the color developing structures 30 and 31, the hardness measured from the surface of the protective layer 20 is 0.03 GPa or more. This hardness is indentation hardness that is measured by the nanoindentation method when the indentation depth is set to 100 nm. This hardness can be measured, for example, using a nanoindenter produced by MTS. When the above hardness is 0.03 GPa or more, the protective layer 20 is sufficiently hard; thus, the scratch resistance of the color developing structures 30 and 31 is increased.

In the color developing structures 30 and 31, the surface roughness Ra of the surface of the protective layer 20 is 2 µm or less. The surface roughness Ra is arithmetic average roughness, and is determined according to JIS B 0601: 2013. The surface roughness Ra can be measured, for example, using a non-contact surface roughness meter (non-contact surface-layer cross-sectional shape measurement system) produced by Ryoka Systems Inc. When the surface roughness Ra is 2 µm or less, the surface of the protective layer 20 is sufficiently flat; thus, diffuse reflection of light on the surface of the protective layer 20 can be suppressed. As a result, a reduction in the visibility of color due to the reflected light from the multilayer film layer 16 caused by the protective layer 20 is suppressed.

In the color developing structures 30 and 31, the water contact angle of the surface of the protective layer 20 is 60 degrees or more. The water contact angle is a contact angle measured 5 seconds after a water droplet adheres to the surface of the protective layer 20. The contact angle can be measured according to a known procedure using a contact angle meter. When the above water contact angle is 60 degrees or more, the affinity between the protective layer 20 and water is suppressed to a low level. Accordingly, when the color developing structures 30 and 31 get wet in water, deterioration of the protective layer 20 upon absorption of water is suppressed.

When the color developing structures 30 and 31 are used in an embodiment in which the outermost surface of the outermost layer positioned on the side opposite to the protective layer 20 side with respect to the multilayer film layer 16 is exposed to outdoor air, for example, when the color developing structures 30 and 31 are observed from the side opposite to the multilayer film layer 16 side with respect to the substrate 15, the various characteristics described above are applied as described below. That is, in the above outermost surface of the above outermost layer, for example, the surface of the substrate 15 on the side opposite to the multilayer film layer 16, the above hardness is 0.03 GPa or more, the above surface roughness Ra is 2 µm or less, and the above water contact angle is 60 degrees or more.

### [Modification of Color Developing Structure]

The color developing structure can also have the configuration shown in Fig. 6. The uneven structure 12 provided in the color developing structure 32 shown in Fig. 6 comprises a substrate 15, a resin layer 17 that covers the surface of the substrate 15, and a multilayer film layer 16 laminated on the resin layer 17. The surface of the substrate 15 is flat, and the resin layer 17 has unevenness on the surface thereof. In the form shown in Fig. 6, a laminate of the substrate 15 and the resin layer 17 is an uneven layer. As the uneven structure on the surface of the resin layer 17, the uneven structure of the first configuration and the uneven structure of the second configuration can be both applied.

As the method for forming the uneven structure of the resin layer 17, for example, a nanoimprint method is used. For example, when the uneven structure of the resin layer 17 is formed by an optical nanoimprint method, a photocurable resin is first applied as a resin that constitutes the resin layer 17 to the surface of a mold on which unevenness is formed. The mold is an intaglio plate having unevenness reversed from unevenness to be formed. The method for applying the photocurable resin is not limited, and a known coating method, such as an ink jet method, a spray method, a bar coating method, a roll coating method, a slit coating method, or a gravure coating method, may be used.

Subsequently, the substrate 15 is laminated on the surface of the coating layer comprising the photocurable resin. Then, while the coating layer and the mold are pressed to each other, light is applied from the substrate 15 side with respect to the coating layer, or from the mold side with respect to the coating layer. Subsequently, the mold is released from the cured photocurable resin and the substrate 15. The unevenness of the mold is thereby transferred to the photocurable resin to form a resin layer 17 having unevenness on the surface thereof. The mold is made of, for example, synthetic quartz or silicon, and is formed using a known ultra-fine processing technology, such as lithography that applies light or a charged particle beam, or dry etching.

The photocurable resin may be applied to the surface of the substrate 15, and light may be applied while the mold is pressed to the coating layer on the substrate 15.

A thermal nanoimprint method may be used in place of the optical nanoimprint method. In this case, as the resin of the resin layer 17, a resin such as a thermoplastic resin or a thermosetting resin is used depending on the production method.

### [Application Examples of Color Developing Structure]

Specific application examples of the color developing structures described above are described. In the application examples described below, any of the color developing structure 30 having the first configuration, the color developing structure 31 having the second configuration, and the color developing structure 32 described in the above modification can be applied.

### <Display>

The first application example of the color developing structure is an embodiment in which the color developing structure is used for a display. The display may be used for the purpose of increasing difficulty in the forgery of articles, or for the purpose of enhancing the designability of articles. The display may be used for both purposes. For the purpose of increasing difficulty in the forgery of articles, the display is attached to, for example, authentication documents, such as passports and licenses; securities, such as gift certificates and checks; cards, such as credit cards and cash cards; bills; and the like. Moreover, for the purpose of enhancing the designability of articles, the display is attached to, for example, wearable accessories; articles carried by users; installed articles, such as furniture and household appliances; structures, such as walls and doors; interior and exterior furnishings of automobiles; and the like.

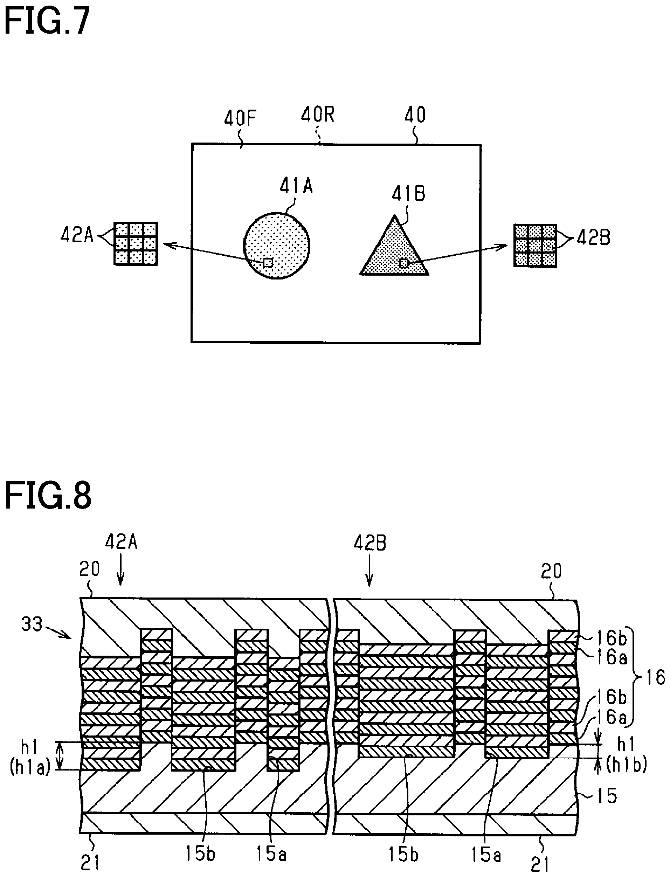

As shown in Fig. 7, the display 40 has a front surface 40F and a rear surface 40R opposite to the front surface 40F. When viewed from the direction facing the front surface 40F, the display 40 contains a first display region 41A and a second display region 41B. The first display region 41A is a region in which a plurality of first pixels 42A are arranged, and the second display region 41B is a region in which a plurality of second pixels 42B are arranged. In other words, the first display region 41A is constituted from a set of a plurality of first pixels 42A, and the second display region 41 B is constituted from a set of a plurality of second pixels 42B. The configuration of the color developing structure is applied to each of the first pixels 42A and the second pixels 42B, and the first pixels 42A and the second pixels 42B develop colors with different hues. That is, when viewed from the direction facing the front surface 40F of the display 40, colors with different hues are visually recognized in the first display region 41A and the second display region 41B.

Each of the first display region 41A and the second display region 41B expresses characters, symbols, graphics, patterns, designs, backgrounds thereof, etc., singly or in combination of two or more of these regions. For example, in the configuration shown in Fig. 7, a circular graphic is expressed by the first display region 41A, and a triangular graphic is expressed by the second display region 41B.

The display 40 may have, around the display regions 41A and 41B, etc., a region having a configuration different from the configuration of the color developing structure, for example, a region having a configuration in which a multilayer film layer is laminated on a substrate with a flat surface, or a region having a configuration in which a metallic thin film is laminated on a substrate.

Fig. 8 is a drawing showing cross-sectional structures of the first pixel 42A and the second pixel 42B. Fig. 8 shows an example in which the color developing structure 33 that constitutes these pixels 42A and 42B is a color developing structure having the first configuration.

The height h1 of the projections 15a is different between the first pixel 42A and the second pixel 42B. In contrast, the configuration of the multilayer film layer 16 is the same between the first pixel 42A and the second pixel 42B. That is, the material and film thickness of the high refractive index layer 16a, the material and film thickness of the low refractive index layer 16b, and the number of these layers are the same between the first pixel 42A and the second pixel 42B. Because the height h1 of the projections 15a is different between the first pixel 42A and the second pixel 42B, the first pixel 42A and the second pixel 42B develop colors with different hues. The height h1 of the projections 15a in each of the pixels 42A and 42B may be set depending on the hue desired for each of the pixels 42A and 42B.

As the difference between the height hla of the projections 15a in the first pixel 42A and the height h1b of the projections 15a in the second pixel 42B is larger, the difference between the hue developed by the first pixel 42A and the hue developed by the second pixel 42B increases, and the difference in hue is more likely to be recognized by the human eyes. For example, the difference between the height h1a and the height h1b is 5 nm or more, and is 1% or more of the peak wavelength of the reflected light from the multilayer film layer 16 when the multilayer film layer 16 is laminated on a flat surface.

For example, when the peak wavelength of the reflected light from the multilayer film layer 16 is 500 nm when the multilayer film layer 16 is laminated on a flat surface, the height h1 of the projections 15a is about 100 nm in order to develop green using the pixels, and the height h1 of the projections 15a is about 200 nm in order to develop red using the pixels.

In the above configuration, the height of the uneven structure on the surface of the multilayer film layer 16 is different between the first display region 41A and the second display region 41B. Because the uneven structure of the entire display 40 is more complicated, compared with a case in which such a height is constant; thus, the uneven structure is likely to be deformed. Therefore, it is highly beneficial to protect the uneven structure of the multilayer film layer 16 by the protective layer 20.

When the color developing structure applied to the pixels 42A and 42B is a color developing structure having the second configuration, the hue can be adjusted in the following manner. Specifically, in a configuration in which the ratio of the second projection elements 15Eb is smaller than the ratio of the first projection elements 15Ea in the pattern constituted from the projected images of the projections 15c in the above virtual plane, the influence of the height h2 of the second projection element 15Eb on the hues developed by the pixels 42A and 42B is very small. Therefore, also in the color developing structure having the second configuration, the hues developed by the pixels 42A and 42B can be controlled by adjusting the height h1 of the first projection elements 15Ea corresponding to the projections 15a of the first configuration.

The pattern of the projections 15a is set, for example, for each first pixel 42A and each second pixel 42B. That is, the average value and standard deviation of the length d1 and length d2 in a plurality of rectangles R that constitute the pattern of the projected images of the projections 15a are set for each of the pixels 42A and 42B. The pattern of the projections 15a may be different between the pixel 42A and 42B, or may be the same between the pixels 42A and 42B. The size of the pixels 42A and 42B may be set depending on the desired resolution of images constituted from the display regions 41A and 41B. In order to display a more highly accurate image, one side of the pixels 42A and 42B is preferably 10 µm or more.

In the production of the pixels 42A and 42B, the uneven structure of each of the pixels 42A and 42B can be formed by, for example, collectively forming projections according to a pattern comprising a plurality of rectangles R in a region with a large area, and then dividing the projections by cutting or the like so that the pattern is divided. Such a production method is preferable because it facilitates the production process. As a result of dividing the projections, projections that constitute rectangles R in which the length d2 in the second direction Dy is smaller than the length d1 in the first direction Dx may be formed at the edges of the pixels 42A and 42B in some of the plurality of pixels 42A and 42B. However, even if the pattern of the projections 15a contains such rectangles R, when the ratio thereof is sufficiently small, the optical influence of the rectangles R is so small that it can be ignored.

As the protective layer 20, a protective layer 20 having light absorption properties for light transmitted through the multilayer film layer 16 is used. Further, the color developing structure 33 that constitutes the pixels 42A and 42B comprises an antireflection layer 21. The antireflection layer 21 covers the surface of the substrate 15 opposite to the surface in contact with the multilayer film layer 16, i.e., the surface of the uneven layer opposite to the multilayer film layer 16.

The pixels 42A and 42B are arranged so that the antireflection layer 21 side with respect to the protective layer 20 becomes the surface 40F side of the display 40 with respect to the rear surface 40R. That is, the protective layer 20 constitutes the rear surface 40R of the display 40, and the antireflection layer 21 constitutes the front surface 40F. The display 40 is observed from the front surface 40F side, i.e., the side on which the antireflection layer 21 is positioned.

The antireflection layer 21 has a function of reducing the surface reflection of the surface of the substrate 15 opposite to the surface having unevenness. That is, the film thickness of the antireflection layer 21 is equal to or less than the wavelength of light in the visible range. In order to enhance the function of suppressing surface reflection, the film thickness of the antireflection layer 21 is preferably 200 nm or less. Examples of the material that constitutes the antireflection layer 21 include magnesium fluoride (MgF₂), silicon dioxide (SiO₂), and the like. In order to enhance the function of suppressing the surface reflection of the substrate 15, the refractive index of the antireflection layer 21 is preferably equal to or less than the refractive index of the substrate 15. The antireflection layer 21 may be a layer comprising a multilayer film in which high refractive index layers and low refractive index layers are alternately laminated.

When the display 40 is observed from the front surface 40F side, if there is strong surface reflection from the substrate 15, the visibility of color due to the reflected light in a specific wavelength band from the multilayer film layer 16 is reduced. In contrast, because the surface reflection of the substrate 15 is reduced due to the antireflection layer 21, a reduction in the visibility of color due to the reflected light from the multilayer film layer 16 is suppressed, and desired coloring is suitably obtained in the display 40.

The substrate 15 is continuous between the first pixel 42A and the second pixel 42B; that is, these pixels 42A and 42B have one common substrate 15.

The uneven structure of the substrate 15 is formed, for example, by performing lithography or dry etching on each of a portion corresponding to the first display region 41A in which the first pixels 42A are positioned, and a portion corresponding to the second display region 41B in which the second pixels 42B are positioned. The height h1 of the projections 15a can be changed by changing the etching time.

The multilayer film layer 16 is simultaneously formed by the same step in the portion corresponding to the first display region 41A and the portion corresponding to the second display region 41B. Similarly, the protective layer 20 is simultaneously formed in the portions corresponding to the display regions 41A and 41B, and the antireflection layer 21 is also simultaneously formed. The antireflection layer 21 is formed, for example, before or after the formation of the multilayer film layer 16, by sputtering or vacuum deposition.

When the first display region 41A and the second display region 41B are in contact with each other, the multilayer film layer 16, the protective layer 20, and the antireflection layer 21 are each continuous between the first pixel 42A and the second pixel 42B.

The hues developed by the first pixel 42A and the second pixel 42B can be made different by making the material, film thickness, etc., of the layers that constitute the multilayer film layer 16 different between the first pixel 42A and the second pixel 42B. However, if the configuration of the multilayer film layer 16 is different between the display regions 41A and 41B, it is necessary to repeat masking of the regions and formation of the high refractive index layer 16a and the low refractive index layer 16b for each of the display regions 41A and 41B; thus, the production process becomes complicated. As a result, the production cost increases, and the yield decreases. Moreover, because it is difficult to mask a minute region, there is a limit to the formation of a precise image.

In contrast, with the configuration of the above display 40, the multilayer film layer 16 can be simultaneously formed for the portion corresponding to the first display region 41A and the portion corresponding to the second display region 41B; thus, the load required for the production of the display 40 is reduced. Moreover, compared with masking of a minute region, it is easier to make the height h1 of the projections 15a different for each minute region; thus, a more precise image can be formed by making the display regions 41A and 41B small.

In order to make the configuration of the multilayer film layer 16 the same between the first pixel 42A and the second pixel 42B, and to make the height h1 of the projections 15a different therebetween, so that their hues are different from each other, it is preferable to configure the multilayer film layer 16 in the following manner. Specifically, the multilayer film layer 16 is preferably configured so that the peak wavelength of the reflected light from the multilayer film layer 16 when the multilayer film layer 16 is laminated on a flat surface is positioned between the wavelength of light with the hue developed by the first pixel 42A and the wavelength of light with the hue developed by the second pixel 42B.

By changing the height h1 of the projections 15a, the shape of each layer that constitutes the multilayer film layer 16 varies to thereby change the optical path length, and the wavelength band of light efficiently scattered by the uneven structure changes. Due to such phenomena, the hue visually recognized in the color developing structure is considered to change.

Moreover, when the configuration of the color developing structure 32, i.e., the configuration in which the resin layer 17 laminated on the substrate 15 has an uneven structure, is applied to the configuration of the pixels 42A and 42B, this uneven structure is formed, for example, in the following manner. Specifically, using a nanoimprint method, a mold in which the height of unevenness is changed in portions corresponding to the display regions 41A and 41B is used, and the uneven structure of the resin layer 17 of each of the pixels 42A and 42B is simultaneously formed.

Such a mold may be formed by performing lithography or dry etching on each of the portions corresponding to the display regions 41A and 41B. Further, the mold can be more easily formed by the following method, for example. Specifically, the radiation dose of a charged particle beam applied to a resist used in charged particle beam lithography is changed for each of the display regions 41A and 41B, and the developing time is adjusted so that unevenness with a desired height is formed in each of the display regions 41A and 41B to form a resist pattern. After a metal layer, such as nickel, is formed by electrocasting on the surface of the resist pattern, the resist is dissolved, thereby obtaining a mold made of nickel.

The number of display regions contained in the display 40, i.e., the number of display regions in which pixels constituted from the color developing structure are arranged and develop colors with different hues, is not limited. The number of display regions may be one, or three or more. Further, the display region may contain a display element constituted from the color developing structure. The display element is not limited to a pixel that is the minimum repeating unit for forming a raster image, and may be a region connecting anchor points for forming a vector image.

Moreover, as the configuration of the display element, any configuration of the color developing structure mentioned above can be applied. For example, the protective layer 20 may not have light absorption properties for light transmitted through the multilayer film layer 16, may only have the function to protect the uneven structure of the multilayer film layer 16, and may have the function to absorb ultraviolet rays by containing an ultraviolet absorber. In these cases, the protective layer 20 constitutes the front surface 40F of the display 40, the antireflection layer 21 constitutes the rear surface 40R, and the display 40 is preferably observed from the front surface 40F side, i.e., the side on which the protective layer 20 is positioned. The antireflection layer 21 may not be provided.

### <Color-producing Sheet and Molding>

The second application example of the color developing structure is an embodiment in which the color developing structure is used for a color-producing sheet. The color-producing sheet is a sheet constituted from the color developing structure, and is fixed to an adherend for decoration etc. The color-producing sheet and the adherend constitute a molding.

The shape and material of the adherend are not limited. For example, when the color-producing sheet is attached to an adherend made of a resin, the color-producing sheet is fixed to the surface of the adherend, for example, using a laminate decorating method, such as a film insertion method, an in-mold lamination method, or a three-dimensional overlay lamination method (TOM).

The film insertion method is a method for integrating an adherend and a color-producing sheet formed by thermal vacuum molding, by performing injection molding while the color-producing sheet is placed in a mold. The in-mold lamination method is a method that performs thermal vacuum molding of a color-producing sheet, formation of an adherend by injection molding, and integration with the color-producing sheet in the same mold. The three-dimensional overlay lamination method is a method for integrating an adherend and a color-producing sheet by taking advantage of the atmospheric pressure difference between airtight spaces separated upward and downward by the color-producing sheet.

Because heat treatment, pressure treatment, and vacuum treatment are performed in these laminate decorating methods, large physical or chemical loads are applied to the color developing structure. Therefore, it is highly beneficial to protect the uneven structure of the multilayer film layer 16 by the protective layer 20.

As the color developing structure that constitutes the color-producing sheet, any of the configurations of the color developing structures described above can be applied. However, because the color-producing sheet is used so that it is disposed along the surface of the adherend, the color developing structure preferably has a property of easily deforming into a shape that follows the surface of the adherend. From such a viewpoint, the configuration of the color developing structure 32, i.e., the configuration in which the resin layer 17 laminated on the substrate 15 has an uneven structure, is preferable because the degree of freedom regarding the material that can be used as the substrate 15 is high.

When the color-producing sheet is fixed to an adherend made of a resin using a laminate decorating method, the substrate 15 is made of a thermoplastic resin so that the substrate 15 can follow the adherend and deform during heating for integration with the adherend. Examples of thermoplastic resins include polyethylene terephthalate (PET), acrylonitrile-butadiene-styrene copolymers (ABS resins), polymethyl methacrylate (PMMA), polyethylene (PE), polypropylene (PP), polycarbonate (PC), nylon (PA), and the like. The film thickness of the substrate 15 is preferably thin, because the color-producing sheet can easily follow the adherend. For example, the film thickness of the substrate is preferably about 20 µm or more and 300 µm or less.

As the protective layer 20, a protective layer 20 having light absorption properties for light transmitted through the multilayer film layer 16 is used. When the color-producing sheet is fixed to an adherend made of a resin using a laminate decorating method, the protective layer 20 preferably has high following properties for the uneven structure of the multilayer film layer 16 during heating for integration with the adherend. From such a viewpoint, the protective layer 20 preferably has thermoplasticity. Specifically, when the protective layer 20 is configured to have thermoplasticity at a temperature of 100°C or more and 160°C or less, following properties for the uneven structure of the multilayer film layer 16 are suitably obtained during heating in the laminate decorating method. In order to realize such a configuration, in a configuration in which the protective layer 20 contains a black pigment and a resin, a thermoplastic resin may be used as the resin. Examples of thermoplastic resins include the thermoplastic resins mentioned above as examples of the material of the substrate 15.

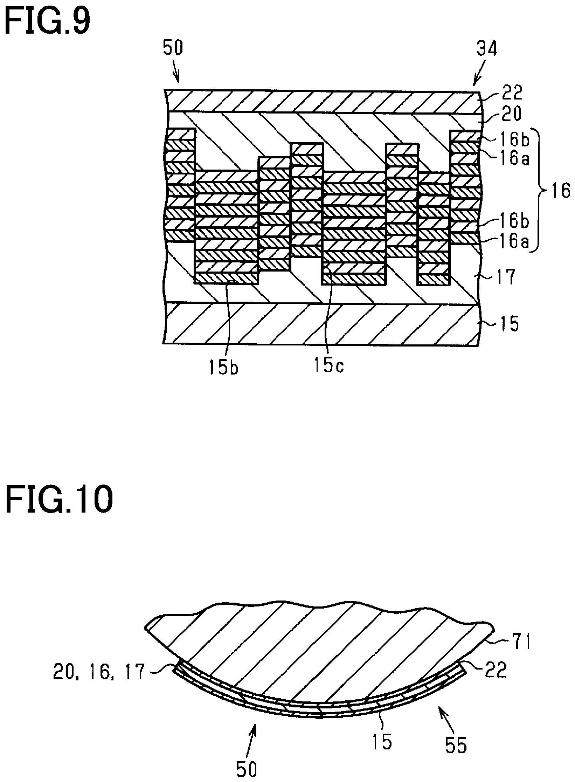

As shown in Fig. 9, the color developing structure 34 that constitutes a color-producing sheet 50 comprises an adhesion layer 22 that covers a surface of the protective layer 20 on the side opposite to the surface in contact with the multilayer film layer 16. The adhesion layer 22 has the function to bond the color-producing sheet 50 and an adherend. Fig. 9 shows an example in which a color developing structure, that is configured so that the resin layer 17 laminated on the substrate 15 has an uneven structure of the second configuration, is applied as the color developing structure 34 that constitutes the color-producing sheet 50.

When the color-producing sheet is fixed to an adherend made of a resin using a laminate decorating method, the adhesion layer 22 preferably has heat-sealing properties so that the adhesion layer 22 can exhibit an adhesive function during heating for integration with the adherend. Examples of the heat-sealing agent that constitutes such an adhesion layer 22 include thermoplastic resins, such as polyethylene, polyvinyl acetate, acrylic resins, polyamide, polyester, polypropylene, and polyurethane.

The adhesion layer 22 is formed, for example, using a known coating method, such as an ink jet method, a spray method, a bar coating method, a roll coating method, a slit coating method, or a gravure coating method. The film thickness of the adhesion layer 22 is not limited, but is preferably about 2 µm or more and 200 µm or less, for example.

As shown in Fig. 10, the color-producing sheet 50 of the above configuration is fixed to an adherend 71 so that the adhesion layer 22 is in contact with the adherend 71. That is, in a molding 55 in which the color-producing sheet 50 is fixed to the adherend 71, the substrate 15 faces outside, and the adherend 71 is positioned on the side on which the protective layer 20 is positioned with respect to the substrate 15. The color-producing sheet 50 is observed from the substrate 15 side.

The color developing structure 34 that constitutes the color-producing sheet 50 may comprise the same antireflection layer as the display 40 described above. Moreover, as the configuration of the color-producing sheet, any of the configurations of the color developing structures described above can be applied. For example, the protective layer 20 may not have light absorption properties for light transmitted through the multilayer film layer 16, may only have the function of protecting the uneven structure of the multilayer film layer 16, and may have the function to absorb ultraviolet rays by containing an ultraviolet absorber. In these cases, the protective layer 20 faces outside and constitutes the outermost surface of the color-producing sheet, and the color-producing sheet is fixed to the adherend 71 so that the adherend 71 is positioned on the side on which the substrate 15 is positioned with respect to the protective layer 20. The color-producing sheet is preferably observed from the protective layer 20 side.

As described above, according to the above embodiment, the following effects can be obtained.
(1) In the color developing structure, the surface of the multilayer film layer 16 is covered with the protective layer 20; thus, the deformation of the uneven structure of the multilayer film layer 16, and clogging of the uneven structure can be suppressed. Therefore, changes in the optical path length of light reflected on the multilayer film layer 16, and a reduction in the reflected light diffusion effect and reflected light diffraction effect of the uneven structure are suppressed; thus, desired coloring is suitably obtained in the color developing structure. Moreover, because the protective layer 20 is directly laminated on the multilayer film layer 16, the production process is simpler compared with a configuration in which a protective layer is provided through an adhesion layer etc., and an increase in the production cost and a reduction in the yield are suppressed. With the display 40 comprising pixels constituted from such a color developing structure, and the color-producing sheet 50 constituted from such a color developing structure, a display 40 and a color-producing sheet 50 by which desired coloring is suitably obtained are realized. Furthermore, the decorativeness of a molding comprising the color-producing sheet 50 is enhanced.
(2) If the protective layer 20 is configured to have light absorption properties to absorb light transmitted through the multilayer film layer 16, when the color developing structure is observed from the side on which the uneven layer is positioned, light transmitted through the multilayer film layer 16 from the uneven layer side with respect to the multilayer film layer 16 is absorbed by the protective layer 20, and the transmitted light is prevented from returning to the uneven layer side. Therefore, visual recognition of light in a wavelength band different from the reflected light from the multilayer film layer 16 is suppressed; thus, a reduction in the visibility of color due to the reflected light is suppressed, and desired coloring is suitably obtained in the color developing structure.
   When the protective layer 20 is configured to contain a black pigment, the protective layer 20 can absorb light in a wide wavelength band in the visible region; thus, a protective layer 20 that absorbs transmitted light can be suitably realized, regardless of the wavelength band of light transmitted through the multilayer film layer 16.
(3) With a configuration in which the antireflection layer 21 is provided on a surface of the uneven layer on the side opposite to the surface in contact with the multilayer film layer 16, the surface reflection of the uneven layer is reduced when the color developing structure is observed from the side on which the uneven layer is positioned; thus, a reduction in the visibility of color due to the reflected light from the multilayer film layer 16 is suppressed, and desired coloring is suitably obtained in the color developing structure.
(4) With a configuration in which the adhesion layer 22 is provided on a surface of the protective layer 20 on the side opposite to the multilayer film layer 16, the color developing structure can be suitably attached to an adherend for decoration or the like. Further, a configuration suitable for applications that allow observation of the color developing structure from the side on which the uneven layer is position is realized.
(5) When the protective layer 20 is configured to contain an ultraviolet absorber, the protective layer 20 absorbs ultraviolet rays; thus, the materials that constitute the color developing structures 30 and 31 are prevented from being deteriorated by ultraviolet rays.
(6) When the protective layer 20 has a form constituted from two or more layers, it is possible to multi-functionalize the protective layer 20 or enhance the function of the protective layer 20 by combining the functions of these layers.
(7) When the hardness measured from the outermost surface of the color developing structure is 0.03 GPa or more, the scratch resistance of the color developing structure is increased.
(8) When the arithmetic average roughness of the outermost surface of the color developing structure is 2 µm or less, diffuse reflection of light on the outermost surface of the color developing structure can be suppressed. As a result, a reduction in the visibility of color due to the reflected light from the multilayer film layer 16 is suppressed.
(9) When the water contact angle of the outermost surface of the color developing structure is 60 degrees or more, the color developing structure is prevented from being deteriorated by adhesion of water to the outermost surface.
(10) When the color developing structure is configured to have an uneven structure of the first configuration, an effect of diffusing reflected light is obtained by the projections, and light in a specific wavelength band is observed across a wide angular range as the reflected light from the multilayer film layer 16.
(11) When the color developing structure is configured to have an uneven structure of the second configuration, an effect of diffusing reflected light and an effect of diffracting reflected light are obtained by the projections, light in a specific wavelength band can be observed in a wide angular range as the reflected light from the multilayer film layer 16, and the intensity of this reflected light is increased; thus, glossy and vivid color is visually recognized.
(12) With the configuration in which the color developing structure has an uneven structure of the second configuration, the following form can be realized by the second pattern constituted from the projected images of the second projection elements 15Eb. That is, a plurality of band regions are arranged along each of the first direction Dx and the second direction Dy, and at least one of the average value and standard deviation of the arrangement intervals of the band regions is different between the arrangement intervals along the first direction Dx and the arrangement intervals along the second direction Dy. With this configuration, the reflected light diffraction effect of the second projection elements 15Eb can be adjusted depending on the difference between the influence of the reflected light scattering effect of the first projection elements 15Ea on the first direction Dx, and the influence thereof on the second direction Dy. Moreover, in a configuration in which the average value of the arrangement intervals in the first direction Dx and the average value of the arrangement intervals in the second direction Dy in the band regions are each 1 µm or more and 100 µm or less, the reflected light diffraction effect can be adjusted within a range in which the reflected light diffraction effect is suitably exhibited.
(13) The display 40 comprising pixels constituted from the color developing structure can realize a configuration in which the material and film thickness of each layer that constitutes the multilayer film layer 16 are the same between the first pixel 42A and the second pixel 42B, and the height of the projections in the uneven layer is different therebetween. With this configuration, colors with different hues are visually recognized in the region in which the first pixels 42A are positioned, and the region in which the second pixels 42B are positioned. Further, because the configuration of the multilayer film layer 16 is the same between the first pixel 42A and the second pixel 42B, it is not necessary to form the multilayer film layer 16 in each region in which each of the pixels 42A and 42B is positioned. As a result, the display 40 having pixels 42A and 42B that develop different hues can be formed by a simple production process.
(14) In the color-producing sheet 50 constituted from the color developing structure, when the protective layer 20 is configured to have thermoplasticity, the following properties of the protective layer 20 for the uneven structure of the multilayer film layer 16 are suitably obtained when the color-producing sheet 50 is fixed to the surface of the adherend 71 using a laminate decorating method. Therefore, a suitable configuration is realized as the color-producing sheet 50 fixed to the surface of an adherend using a laminate decorating method.
(15) In the color-producing sheet 50 constituted from the color developing structure, when the adhesion layer 22 is configured to have heat-sealing properties, the adhesion layer 22 can be brought into contact with the adherend 71 so that the color-producing sheet 50 is integrated with the adherend 71 when the color-producing sheet 50 is fixed to the surface of the adherend 71 using a laminate decorating method. The color-producing sheet 50 and the adherend 71 are thereby suitably bonded together. Therefore, a suitable configuration is realized as the color-producing sheet 50 fixed to the surface of the adherend 71 using a laminate decorating method. Moreover, when the surface of the color-producing sheet 50 on the side of the substrate 15 is fixed to the adherend 71, the substrate 15 is configured to support the multilayer film layer 16 and the protective layer 20 on the surface of the adherend 71; thus, high heat resistance is required so that strength is not reduced by heat applied to the substrate 15 in the production process. In contrast, with a configuration in which the surface on the protective layer 20 side is fixed to the adherend 71, the degree of freedom to select the material of the substrate 15 is increased.
(16) In the molding 55 comprising the color-producing sheet 50, when the protective layer 20 has light absorption properties to absorb light transmitted through the multilayer film layer 16, and the adherend 71 is positioned on the side on which the protective layer 20 is positioned with respect to the uneven layer, the color-producing sheet 50 is observed from the side on which the uneven layer is positioned, and light transmitted through the multilayer film layer 16 is absorbed by the protective layer 20. Therefore, desired coloring is suitably obtained in the color-producing sheet 50. That is, because the color-producing sheet 50 is used in an embodiment in which its color-developing properties can be suitably exhibited, the decorativeness of the molding is enhanced.
(17) With a configuration in which an uneven structure is formed in the resin layer 17 that covers the surface of the substrate 15, the degree of freedom to select the material of the substrate 15 is increased. Further, when the uneven structure is formed, a nanoimprint method suitable for the formation of fine unevenness can be applied.
(18) According to a production method that forms an uneven structure of an uneven layer using a nanoimprint method, a fine uneven structure can be suitably and easily formed. Further, according to a production method that uses an optical nanoimprint method or a thermal nanoimprint method as the nanoimprint method, formation of an uneven structure by the nanoimprint method can be suitably and easily realized.

### [Modification]

The above embodiments can be performed with the following modifications.

A layer having light absorption properties for light transmitted through the multilayer film layer 16 may be provided on the side opposite to the protective layer 20 with respect to the multilayer film layer 16. Such a configuration can be realized by, for example, using black layers as the substrate 15 and the resin layer 17, or disposing a black layer on the surface of the substrate 15 on the side opposite to the multilayer film layer 16. In this case, the protective layer 20 is made of a material that is transparent to light in the visible range, and the color developing structure is observed from the side on which the protective layer 20 is positioned. In this case, in a configuration comprising an antireflection layer 21, the antireflection layer 21 may be provided on the protective layer 20, and the adhesion layer 22 may be provided so as to constitute the outermost surface of the color developing structure on the substrate 15 side.

For example, when an uneven structure is formed using an optical nanoimprint method, it is necessary to use a black resin having photocurability as the resin layer 17. When a black substrate 15 and a black resin layer 17 are used, there are large restrictions on the materials. Moreover, compared with a configuration in which a transparent layer, such as the substrate 15, is sandwiched between the multilayer film layer 16 and the layer that absorbs the transmitted light, in a configuration in which the layer that absorbs the transmitted light is in direct contact with the multilayer film layer 16, the light transmitted through the multilayer film layer 16 is more efficiently absorbed by this layer; thus, a reduction in the visibility of color due to the reflected light is suitably suppressed.

The color developing structure may comprise a layer having ultraviolet absorption properties as a layer separately from the protective layer 20. For example, the color developing structure may comprise a layer containing an ultraviolet absorber on the side opposite to the multilayer film layer 16 with respect to the substrate 15. With such a configuration, particularly when the color developing structure is observed from the side on which the substrate 15 is positioned, that is, when incident light enters the color developing structure from the side on which the substrate 15 is positioned, a high effect of preventing the deterioration of the material that constitutes the color developing structure due to ultraviolet rays can be obtained.

The pixels contained in the display 40 may include pixels in which the uneven structures in the uneven layers extend in different directions in the above virtual plane. Specifically, the second direction Dy that is a direction in which the projection extends in any pixel, and the second direction Dy that is a direction in which the projection extends in a pixel different from this pixel may be different from each other; for example, these directions may be orthogonal to each other. With such a configuration, it is possible to change, by the pixels, the direction in which the reflected light from the multilayer film layer 16 is diffused, and various images can be expressed.

Because the multilayer film layer 16 is also formed on the side surface of the projections in the uneven layer, the width of the projection of the uneven structure in the multilayer film layer 16 is slightly wider than the width of the projection in the uneven layer. In a portion in which pixels whose uneven structures extend in different directions are adjacent to each other, portions spreading as described above in the multilayer film layer 16 are connected between the projections extending in different directions. If the uneven structure of the multilayer film layer 16 is modified, desired coloring in a desired direction is less likely to be obtained from each pixel. Therefore, it is preferable that a region in which unevenness is not formed in the uneven layer is provided between the pixels whose uneven structures extend in different directions. Moreover, a region in which unevenness is not formed in the uneven layer may be also provided between the pixels whose uneven structures extend in the same direction. With such a configuration, modification of the uneven structure caused by the spread of the multilayer film layer 16 is suppressed at the edges of the pixels, and desired coloring is more likely to be obtained from the entire pixels. The width of the region in which unevenness is not formed provided between the pixels is, for example, preferably 1/2 or more of the film thickness of the multilayer film layer 16.

The projections that constitute the uneven structure of the uneven layer may be configured so that the width in the first direction Dx gradually decreases from the base portion toward the top. With such a configuration, the multilayer film layer 16 is easily formed on the projections. In this case, the length d1 and length d3 in the first direction Dx are specified by the pattern constituted from the bottom surface of the projection.

The graphics that constitute the pattern constituted from the projected images of the projections 15a in the first configuration of the uneven structure in the uneven layer, and the pattern constituted from the projected images of the first projection elements 15Ea in the second configuration are not limited to rectangles. The graphics that constitute these patterns may be ellipses or the like. In short, the graphic may be a shape element that has a shape in which the length along the second direction Dy is equal to or greater than the length along the first direction Dx. The length d1 in the first direction Dx and the length d2 in the second direction Dy in the shape element may satisfy the various conditions described in the explanation of the first configuration.

The outermost layer in the multilayer film layer 16, i.e., the layer that constitutes the uppermost surface of the multilayer film layer 16 opposite to the uneven layer, may function as a protective layer. In this case, the multilayer film layer 16 is an optical functional layer. The layer that functions as a protective layer may be able to suppress changes that make it difficult to obtain desired coloring in the color developing structure, such as deformation, deterioration, etc., of the uneven structure in the layers lower than the protective layer, from at least one viewpoint.

Specifically, the outermost layer in the multilayer film layer 16 has characteristics different from layers other than the outermost layer in the multilayer film layer 16 to thereby function as a protective layer. Such characteristics may be structural characteristics, chemical characteristics, or physical characteristics. Examples include hardness, thickness, the height of unevenness, water repellency, and the like. For example, with a configuration in which the hardness of the outermost layer is higher than that of other layers, or with a configuration in which the thickness of the outermost layer is larger than that of other layers, the outermost layer is more resistant to impact than the other layers are; thus, the uneven structures of the layers lower than the outermost layer are protected. Moreover, with a configuration in which the height of the unevenness in the outermost layer is smaller than that of other layers, that is, the flatness of the outermost layer is higher than that of other layers, the height of the unevenness on the surface of the multilayer film layer 16 decreases, so that impact is less likely to cause deformation of the unevenness; thus, the uneven structures of the layers lower than the outermost layer are protected.

Even when the outermost layer of the multilayer film layer 16 has characteristics different from those of layers other than the outermost layer, the multilayer film layer 16 as a whole has a surface shape that follows the uneven structure of the uneven layer, i.e., unevenness arranged corresponding to the arrangement of the unevenness in the uneven structure of the uneven layer. The multilayer film layer 16 is configured so that, of the incident light entering the multilayer film layer 16, the reflectance of light in a specific wavelength band is higher than the reflectance of light in other wavelength bands.

### [Examples]

The color developing structure mentioned above and the production method thereof are described using specific Examples.

### <Example 1>

Example 1 is a display in which a color developing structure is applied to pixels. The pixels of the display of Example 1 are constituted from a color developing structure having an uneven structure of the first configuration formed on a substrate.

First, a mold was prepared as an intaglio plate used in an optical nanoimprint method. Specifically, because light at a wavelength of 365 nm was used as the light irradiated in the optical nanoimprint method, synthetic quartz capable of transmitting light at this wavelength was used as the material of the mold. In the formation of the mold, a film made of chromium (Cr) was first formed by sputtering on the surface of a synthetic quartz substrate, and an electron beam resist pattern was formed on the Cr film by electron-beam lithography. The formed pattern was a pattern comprising a set of a plurality of rectangles shown in Fig. 2. The region which served as a pixel was a square with one side of 130 mm. The length of the above rectangle in the first direction was 380 nm, and the length of the above rectangle in the second direction was a length selected from normal distribution with an average value of 2400 nm and a standard deviation of 580 nm. In the above pattern, the plurality of rectangles were arranged so that they were not superimposed in the first direction. The resist used was a positive type, and the film thickness was set to 200 nm.

Next, the Cr film in the region exposed from the resist was etched with plasma generated by applying a high frequency to a gas mixture of chlorine (Cl₂) and oxygen (O₂). Subsequently, the synthetic quartz substrate in the region exposed from the resist and the Cr film was etched with plasma generated by applying high frequency to hexafluoroethane gas. The depth of the synthetic quartz substrate etched in this manner was 70 nm. The remaining resist and Cr film were removed, thereby obtaining a mold in which an uneven structure was formed.

Subsequently, Optool HD-1100 (produced by Daikin Industries, Ltd.) was applied as a mold release agent to the surface of the mold. Then, a photocurable resin (PAK-02, produced by Toyo Gosei Co., Ltd.) was applied to the surface of a synthetic quartz wafer used as a substrate, the surface of the mold on which unevenness was formed was pressed to the resin, and light at 365 nm was applied from the rear surface side of the mold. After the photocurable resin was cured by irradiation with this light, the synthetic quartz wafer and the resin layer were removed from the mold. The synthetic quartz wafer in which the resin layer having an uneven structure was laminated was obtained in this manner.

Subsequently, the synthetic quartz wafer was etched with plasma using O₂ gas to remove the photocurable resin remaining in the recesses of the uneven structure. In this process, 40 sccm of O₂ gas was introduced to discharge the plasma. Next, etching with plasma using a gas mixture of octafluorocyclobutane (C₄F₈) and argon (Ar) was carried out to transfer the uneven structure of the resin layer to the synthetic quartz wafer. In this process, 40 sccm of C₄F₈ gas and 60 sccm of Ar gas were introduced. After the pressure in the plasma chamber was set to 5 mTorr, 75 W of RIE power and 400 W of ICP power were applied to discharge the plasma. The height of the projections in the uneven structure formed on the synthetic quartz wafer was set to 100 nm.

Next, organic cleaning was carried out using a mixture of dimethyl sulfoxide and monoethanolamine (7:3) (ST-105, produced by Kanto Chemical Co., Inc.), and acid cleaning was carried out using a mixed aqueous solution comprising sulfuric acid and aqueous hydrogen peroxide as basic components (SH-303, produced by Kanto Chemical Co., Inc.), thereby obtaining a synthetic quartz wafer, which was a substrate having an uneven structure of the first configuration.

Next, TiO₂ films having a film thickness of 205 nm as high refractive index layers, and SiO₂ films having a film thickness of 100 nm as low refractive index layers, were alternately formed by vacuum deposition on the surface of the synthetic quartz wafer having unevenness, thereby forming a multilayer film layer having 5 pairs of the high refractive index layers and the low refractive index layers, i.e., 10 layers.

Next, an SiO₂ film having a film thickness of 100 nm was formed as an antireflection layer by vacuum deposition on the surface of the synthetic quartz wafer on the side opposite to the surface on which the multilayer was laminated.

Further, an acrylic-based UV curing resin was mixed with about 4 mass% of carbon nanotube powder to prepare black ink. The black ink was applied to the surface of the multilayer film layer by a bar coating method, and the coating layer was dried to form a protective layer. The display of Example 1 was obtained in this manner.

When the display of Example 1 was observed from the side on which the antireflection layer was positioned, green was confirmed with good visibility in the regions in which the pixels were positioned.

### <Example 2>

Example 2 relates to a color-producing sheet to which a color developing structure is applied, and a molding using the color-producing sheet. The color-producing sheet of Example 2 is constituted from a color developing structure having an uneven structure of the second configuration formed in a resin layer on a substrate.

First, a mold was prepared as an intaglio plate used in an optical nanoimprint method. Specifically, because light at a wavelength of 365 nm was used as the light irradiated in the optical nanoimprint method, synthetic quartz capable of transmitting light at this wavelength was used as the material of the mold. In the formation of the mold, a film made of chromium (Cr) was first formed by sputtering on the surface of a synthetic quartz substrate, and an electron beam resist pattern was formed on the Cr film by electron-beam lithography. The formed pattern was a pattern comprising a set of a plurality of rectangles shown in Fig. 2. The length of the above rectangles in the first direction was 300 nm, and the length of the above rectangles in the second direction was a length selected from a normal distribution with an average value of 2000 nm and a standard deviation of 500 nm. In the above pattern, the plurality of rectangles were arranged so that they were not superimposed in the first direction. The resist used was a positive type, and the film thickness was set to 200 nm.

Next, the Cr film in the region exposed from the resist was etched with plasma generated by applying high frequency to a gas mixture of chlorine (Cl₂) and oxygen (O₂). Subsequently, the synthetic quartz substrate in the region exposed from the resist and the Cr film was etched with plasma generated by applying high frequency to hexafluoroethane gas. The depth of the synthetic quartz substrate etched in this manner was 70 nm. The remaining resist and Cr film were removed, thereby obtaining a synthetic quartz substrate in which an uneven structure corresponding to the first configuration was formed.

Next, a film made Cr was formed by sputtering on the surface of the synthetic quartz substrate in which the above uneven structure was formed, and an electron beam resist pattern was formed on the Cr film by electron-beam lithography. The formed pattern was a pattern comprising a plurality of band regions shown in Fig. 4. The length of the above band regions in the first direction was 200 nm, and the length of the above band region in the second direction was 94 µm. The above band regions were arranged so that the average value of the arrangement intervals in the first direction was 1.5 µm, and the standard deviation was 0.5 µm for each rectangular region in which the length in the first direction was 40 µm and the length in the second direction was 94 µm. The electron beam resist used was a positive type, and the film thickness was set to 200 nm.

Next, the Cr film in the region exposed from the resist was etched with plasma generated by applying high frequency to a gas mixture of chlorine (Cl₂) and oxygen (O₂). Subsequently, the synthetic quartz substrate in the region exposed from the resist and the Cr film was etched with plasma generated by applying high frequency to hexafluoroethane gas. The depth of the synthetic quartz substrate etched in this manner was 65 nm. After the remaining resist and Cr film were removed, Optool HD-1100 (produced by Daikin Industries, Ltd.) was applied as a mold release agent to the surface of the synthetic quartz substrate. The mold in which an uneven structure corresponding to the second configuration was formed was obtained in this manner.

Next, a photocurable resin (PAK-02, produced by Toyo Gosei Co., Ltd.) was applied to an adhesive-treated surface of a polyester film, one side of which was subjected to easily-adhesive treatment (Cosmoshine A4100, produced by Toyobo Co., Ltd.). The surface of the mold on which unevenness was formed was pressed to the resin, and light at 365 nm was applied from the rear surface side of the mold. After the photocurable resin was cured by irradiation with this light, the polyester film and the resin layer were removed from the mold. The polyester film, which was a substrate on which a resin layer having an uneven structure of the second configuration was laminated, was obtained in this manner.

Next, TiO₂ films having a film thickness of 40 nm as high refractive index layers, and SiO₂ films having a film thickness of 75 nm as low refractive index layers, were alternately formed by vacuum deposition on the surface of the obtained laminate of the substrate and the resin layer having unevenness, thereby forming a multilayer film layer having 5 pairs of the high refractive index layers and the low refractive index layers, i.e., 10 layers.

Next, an acrylic-based UV curing resin was mixed with about 4 mass% of carbon nanotube powder to prepare black ink. The black ink was applied to the surface of the multilayer film layer by a bar coating method. The coating layer was dried at 80°C for 2 minutes, and then irradiated with light at 365 nm, thereby forming a protective layer having a film thickness of 10 µm.

Then, an acrylic-based resin was applied to the surface of the protective layer using a bar coating method, and the coating layer was dried at 80°C for 2 minutes, thereby forming an adhesion layer having a film thickness of about 50 µm. The color-producing sheet of Example 2 was obtained in this manner.

The color-producing sheet of Example 2 was integrated with a polycarbonate adherend using a three-dimensional overlay lamination method, thereby obtaining a molding of Example 2. Specifically, the color-producing sheet was placed in a molding machine with the adhesion layer facing the adherend. After vacuum suction of the inside of the molding machine, heating was performed to 160°C, and the color-producing sheet and the adherend were brought into contact with each other. Pressurization to atmospheric pressure was performed in this state from the color-producing sheet side, thereby integrating the color-producing sheet and the adherend. Thereafter, unnecessary portions of the color-producing sheet were cut, thereby obtaining the molding of Example 2 decorated with the color-producing sheet.

When the molding of Example 2 was observed, a glossy blue color was confirmed with good visibility in the portion in which the color-producing sheet was positioned.

### <Transfer Foil>

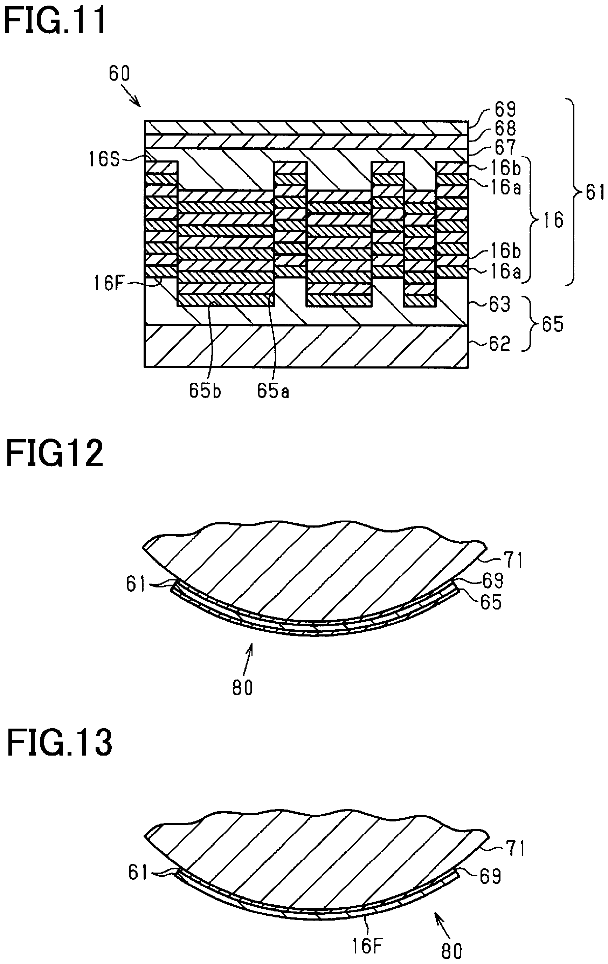

A transfer foil, which is the third application example of the color developing structure mentioned above, and a method for producing the transfer foil are described with reference to Figs. 11 to 14. As the color developing structure provided in the transfer foil, the color developing structure 31 mentioned above can be used.

### [Configuration of Transfer Foil]

First, the configuration of the transfer foil is described. The transfer foil is a sheet used to bond a color developing structure to an adherend, such as an article. Specifically, the transfer foil is used to transfer the color developing structure provided in the transfer foil to an adherend. In the following, configurations other than the multilayer film layer provided in the color developing structure are mainly described. The same signs is assigned to the same configurations as the multilayer film layer mentioned above, and the description thereof omitted.

As shown in Fig. 11, the transfer foil 60 comprises a release layer 65, which is an example of the uneven layer, a multilayer film layer 16, an anchor layer 67, an absorption layer 68, and an adhesion layer 69. Among these, the multilayer film layer 16, the anchor layer 67, the absorption layer 68, and the adhesion layer 69 constitute the color-producing sheet 61. The anchor layer 67 and the absorption layer 68 are examples of the protective layer (outermost layer). That is, the transfer foil 60 is a laminate of the release layer 65 and the color-producing sheet 61.

The release layer 65 comprises a substrate 62 that is a flat layer, and a resin layer 63 positioned on the surface of the substrate 62. The resin layer 63 has an uneven structure on the surface thereof opposite to the surface in contact with the substrate 62. The uneven structure of the resin layer 13 is constituted from a plurality of projections 15a and recesses 15b that are regions between the plurality of projections 15a. The projections 15a are constituted from portions having an irregular length and extending in an approximately band shape.

The release layer 65 is preferably formed from a material that transmits light in the visible range. Usable examples of the substrate 62 include synthetic quartz substrates and films made of resins, such as polyethylene terephthalate (PET). In terms of increasing the flexibility of the transfer foil 60, the substrate 62 is preferably made of a resin. For example, a photocurable resin is used as the resin that constitutes the resin layer 63. The film thickness of the substrate 62 is 10 µm or more and 100 µm or less, for example.

The release layer 65 is configured to be able to be peeled from the multilayer film layer 16 of the color-producing sheet 61. For example, the resin layer 63 contains a component that functions as a mold release agent, such as silicone oil or a fluorine compound.

The multilayer film layer 16 covers the surface of the resin layer 63, and has a surface shape that follows the uneven structure of the resin layer 63. The multilayer film layer 16 has a first surface 16F, which is a surface in contact with the resin layer 63, and a second surface 16S, which is a surface opposite to the first surface 16F. The first surface 16F has an uneven structure comprising unevenness reversed from the projections 15a and the recesses 15b in the uneven structure of the resin layer 63. The second surface 16S has an uneven structure that follows the uneven structure of the resin layer 13. On the projections 15a and the recesses 15b in the resin layer 63, the structures of the multilayer film layer 16, i.e., the material, film thickness, and lamination order of each layer that constitutes the multilayer film layer 16, conform with each other.

The anchor layer 67, the absorption layer 68, and the adhesion layer 69 are positioned on the side facing the second surface 16S with respect to the multilayer film layer 16.

The anchor layer 67 covers the second surface 16S of the multilayer film layer 16, and is sandwiched between the multilayer film layer 16 and the absorption layer 68. The anchor layer 67 has the function to increase the adhesion of the absorption layer 68 to the lower layer. In other words, the anchor layer 67 increases the anchoring strength of the absorption layer 68 to the multilayer film layer 16. For example, a vinyl resin is used as the material that constitutes the anchor layer 67. The film thickness of the anchor layer 67 is 1 µm or more and 10 µm or less, for example.

The absorption layer 68 is in contact with the anchor layer 67 on the side opposite to the multilayer film layer 16 with respect to the anchor layer 67, and has light absorption properties to absorb light transmitted through the multilayer film layer 16. For example, the absorption layer 68 is a layer containing a material that absorbs light in the visible range, such as a light absorber or a black pigment. Specifically, the absorption layer 68 is preferably a layer obtained by mixing a black inorganic pigment, such as carbon black, titanium black, black iron oxide, or black composite oxide, with a resin. The film thickness of the absorption layer 68 is 1 µm or more and 10 µm or less, for example.

The adhesion layer 69 is in contact with the absorption layer 68 on the side opposite to the multilayer film layer 16 with respect to the absorption layer 68, and has adhesion. For example, an acrylic-based resin is used as the material that constitutes the adhesion layer 69. The film thickness of the adhesion layer 19 is 10 µm or more and 100 µm or less, for example.

In the adhesion layer 69, the surface of the adhesion layer 69 opposite to the multilayer film layer 16 may be covered with a protective sheet for protecting the adhesion layer 69 to suppress a reduction in adhesion.

### [Method for Producing Transfer Foil]

The method for producing the above transfer foil 60 is described.

First, a release layer 65 is formed. As the method for forming the uneven structure of the resin layer 63, for example, a nanoimprint method is used. For example, when the uneven structure of the resin layer 63 is formed by an optical nanoimprint method, a coating liquid containing a photocurable resin, which is a material of the resin layer 13, is first applied to a surface of a mold on which unevenness is formed. The mold is an intaglio plate having unevenness reversed from the unevenness to be formed. The coating liquid also contains a mold release agent. The method for applying the coating liquid is not limited, and a known coating method, such as an ink jet method, a spray method, a bar coating method, a roll coating method, a slit coating method, or a gravure coating method, may be used.

Next, the substrate 62 is superimposed on the resin layer 63 on the surface of the layer comprising the coating liquid. While the substrate 62 and the mold are pressed to each other, the resin layer 63 is irradiated with light from the substrate 62 side or the mold side with respect to the resin layer 63. Subsequently, the mold is released from the layer containing the cured photocurable resin and the substrate 62. The unevenness of the mold is thereby transferred to the photocurable resin to form a resin layer 63 having unevenness on the surface thereof, and a release layer 65 comprising the substrate 62 and the resin layer 63 is formed. The mold is made of, for example, synthetic quartz or silicon, and is formed using a known ultra-fine processing technology, such as lithography that applies light or a charged particle beam, or dry etching.

The coating liquid may be applied to the surface of the substrate 62, and light may be applied while the mold is pressed to the layer comprising the coating liquid on the substrate 62.

Moreover, a thermal nanoimprint method may be used in place of the optical nanoimprint method. In this case, as the resin that constitutes the resin layer 63, a resin such as a thermoplastic resin or a thermosetting resin is used depending on the production method.

Subsequently, layers that constitute the multilayer film layer 16 are sequentially laminated on the surface of the release layer 65 having unevenness.

Subsequently, an anchor layer 67 is formed on the second surface 16S, which is the upper surface of the multilayer film layer 16. The anchor layer 67 is formed, for example, using a known coating method, such as an ink jet method, a spray method, a bar coating method, a roll coating method, a slit coating method, or a gravure coating method.

Subsequently, an absorption layer 68 is formed on the surface of the anchor layer 67. The absorption layer 68 is formed, for example, using a known coating method, such as an ink jet method, a spray method, a bar coating method, a roll coating method, a slit coating method, or a gravure coating method. Ink that is a coating liquid for forming the absorption layer 68 may be mixed with a solvent, if necessary. As the solvent, a solvent that is compatible with the resin that constitutes the absorption layer 18 may be selected. Examples include ethyl acetate, butyl acetate, ethylene glycol monomethyl ether, toluene, xylene, methylcyclohexane, ethylcyclohexane, acetone, methyl ethyl ketone, methyl isobutyl ketone, diisobutyl ketone, and the like.

Subsequently, an adhesion layer 69 is formed on the surface of the absorption layer 68. The adhesion layer 69 is formed, for example, using a known coating method, such as an ink jet method, a spray method, a bar coating method, a roll coating method, a slit coating method, or a gravure coating method.

The transfer foil 60 is thereby formed.

While the method for transferring the color-producing sheet 61 from the transfer foil 60 to an adherend is described, the configurations of the color-producing sheet 61 and the molding are described. The color-producing sheet 61 may be used, for example, for the purpose of enhancing the designability of articles, which are adherends, or for the purpose of increasing difficulty in the forgery of articles. The color-producing sheet 61 may be used for both purposes.

As shown in Fig. 12, the transfer foil 60 is attached to an adherend 71 so that the adhesion layer 69 is in contact with the adherend 71. That is, while the transfer foil 60 is fixed to the adherend 71, the substrate 62 of the release layer 65 faces the outside. The shape and material of the adherend 71 are not limited, and it is only necessary that the adherend 71 has a surface to which the adhesion layer 69 can be attached.

As shown in Fig. 13, after the transfer foil 60 is fixed to the adherend 71, the release layer 65 is peeled from the color-producing sheet 61. For example, force is applied to the release layer 65 to pull the release layer 65 to the side opposite to the adherend 71, whereby the release layer 65 is peeled off.

The color-producing sheet 61 is thereby transferred from the transfer foil 60 to the adherend 71, and the color-producing sheet 61 is fixed to the surface of the adherend 71. Then, a molding 80 constituted from the color-producing sheet 61 and the adherend 71 is obtained.

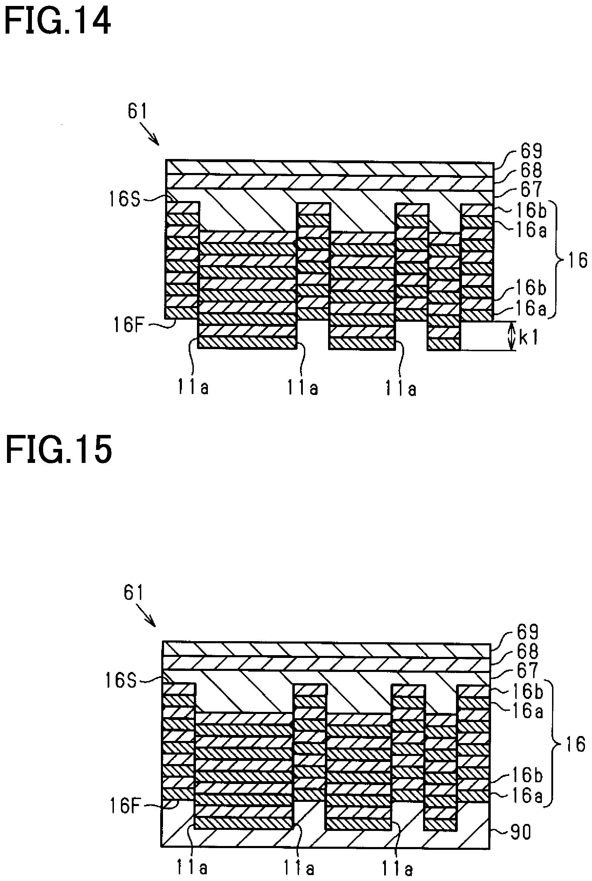

As shown in Fig. 14, after transfer to the adherend 71, the first surface 16F of the multilayer film layer 16 in the color-producing sheet 61 constitutes the outermost surface of the color-producing sheet 61, and is exposed to outdoor air. Moreover, the adhesion layer 69 constitutes the outermost surface of the color-producing sheet 61 on the side opposite to the first surface 16F.

As described above, the uneven structure of the first surface 16F is constituted from unevenness reversed from the projections 15a and the recesses 15b of the unevenness of the release layer 65. That is, when viewed from the direction facing the first surface 16F, the pattern constituted from the recesses 11a of the first surface 16F is a pattern comprising a set of a plurality of rectangles R. Regarding the width distribution of the rectangles R, and the arrangement of the rectangles R, the pattern has the same characteristics as the pattern constituted from the projections 15a when viewed from the direction facing the surface of the resin layer 13.

Moreover, the depth k1 of the recess 11a is equal to the height h1 of the projection 15a, and the depth k1 of the recess 11a is constant. That is, the recess 11a has a shape depressed in one step from the plane in which the recess 11a opens.

### [Action]

The action of the transfer foil is described. As described above, the layer comprising the substrate 62 and the resin layer 63, which are used to form the uneven structure of the multilayer film layer 16 during production of the color-producing sheet 61, is configured to be able to be peeled from the multilayer film layer 16, and is peeled after the color-producing sheet 61 is attached to the adherend 71. Thus, because the color-producing sheet 61 does not have the substrate used during production, the flexibility of the color-producing sheet 61 is increased.

For example, when a color-producing sheet is constituted from a structure containing the substrate 62 and the resin layer 63, and when the substrate 62 and the resin layer 63, in addition to the multilayer film layer 16, are also fixed to the adherend 71, in order to maintain a state in which the color-producing sheet is fixed to the curved surface of the adherend 71, it is necessary to change, not only the multilayer film layer 16, but also the substrate 62 and the resin layer 63, into a shape that follows the curved surface. For that purpose, for example, when the adherend 71 is made of a resin, the adherend 71 and the color-producing sheet are integrated with each other using a laminate decorating method or the like. However, in the laminate decorating method, heat treatment, pressure treatment, and vacuum treatment are performed; thus, physical or chemical loads applied to the color-producing sheet are large. As a result, the uneven structure of the multilayer film layer 16 is modified, and desired coloring is less likely to be obtained in some cases. Further, there are restrictions on the material and surface shape of the adherend 71 that can be used as the object to which the color-producing sheet is attached.

Not only when the laminate decorating method is used, but also when the substrate 62 and the resin layer 63 have low following properties for the shape of the surface of the adherend 71, the color-producing sheet is likely to be removed from the adherend 71.

In contrast, according to the above transfer foil, the substrate 62 and the resin layer 63 are peeled; thus, it is not necessary to deform these layers by plastic deformation into a shape that follows the surface of the adherend 71. The substrate 62 and the resin layer 63 have flexibility to such an extent that they follow the surface of the adherend 71 for a short period of time from attachment of the transfer foil 60 to the adherend 71 until peeling of the release layer 65. Therefore, the color-producing sheet 61 can be fixed to the adherend 71 using the transfer foil 60, without the need to apply large loads, such as heating or pressurization, to the color-producing sheet 61. The color-producing sheet 61 fixed to the adherend 71 does not have the substrate used during production and thus has high flexibility; therefore, the adhesion between the color-producing sheet 61 and the surface of the adherend 71 increases. As a result, the color-producing sheet is also prevented from being removed from the adherend 71.

Further, compared with a case where the color-producing sheet has the substrate used during production, the thickness of the color-producing sheet 61 is thinner. Accordingly, the portion of the molding 80 to which the color-producing sheet 61 is attached is prevented from rising. Therefore, when the color-producing sheet 61 is used for decoration, the decorativeness can be enhanced.

Moreover, the multilayer film layer 16 is formed from a material that is transparent to light in the visible region; thus, of the wavelength bands contained in incident light, part of light in wavelength bands other than the specific wavelength band reflected on the multilayer film layer 16 is transmitted through the multilayer film layer 16. The wavelength band of the transmitted light is different from the wavelength band of the reflected light in the multilayer film layer 16. The color of the transmitted light is mainly a complementary color of the color of the reflected light. Accordingly, when such transmitted light is visually recognized, the visibility of color due to the reflected light is reduced.

In the above transfer foil, the color-producing sheet 61 comprises the absorption layer 68; thus, light transmitted through the multilayer film layer 16 is absorbed by the absorption layer 68, and it is suppressed that the transmitted light is reflected on the surface of the adherend 71, etc., and emitted to the first surface 16F side of the multilayer film layer 16. Therefore, when viewed from the first surface 16F side, visual recognition of light in a wavelength band different from the reflected light from the multilayer film layer 16 is suppressed; thus, a reduction in the visibility of color due to the reflected light is suppressed, and desired coloring is suitably obtained in the color-producing sheet 61.

The above embodiment describes an example in which after the transfer foil 60 is attached and fixed to the adherend 71, the release layer 65 is peeled from the multilayer film layer 16. The procedure of fixing the color-producing sheet 61 to the adherend 71 is not limited to this order. For example, the release layer 65 may be peeled in the transfer foil 60 before attachment to the adherend 71, and the color-producing sheet 61 may be then attached to the adherend 71. The color-producing sheet 61 is thereby attached to the adherend 71 with increased flexibility; thus, the degree of freedom for the shape of the surface of the adherend 71 to which the color-producing sheet 61 is fixed is further increased. In this case, the transfer foil 60 more preferably comprises a protective sheet for protecting the adhesion layer 69 to suppress a decrease in adhesion during peeling of the release layer 65.

Modifications of the color-producing sheet 61 are described.

As shown in Fig. 15, the color-producing sheet 61 may comprise a protective layer 90 that covers the first surface 16F of the multilayer film layer 16. In this case, the protective layer 90 constitutes the outermost surface of the color-producing sheet 61. The protective layer 90 is a coating layer containing a resin, and is made of a material that has light transmittance for light in the visible region, i.e., a material that is transparent to light in the visible region. As the material that constitutes the protective layer 90, for example, an acrylic-based resin is used. For example, when the protective layer 90 is made of a resin containing fluorine, adhesion of dirt, such as sebum, to the surface of the color-producing sheet 61 is suppressed. The film thickness of the protective layer 90 is 1 µm or more and 100 µm or less, for example.

The protective layer 90 is formed after the release layer 65 is peeled. The protective layer 90 is formed, for example, using a known coating method, such as an ink jet method, a spray method, a bar coating method, a roll coating method, a slit coating method, or a gravure coating method.

Even if the color-producing sheet 61 comprises the protective layer 90, the thickness of the entire color-producing sheet 61 can be reduced, and the flexibility of the color-producing sheet 61 is increased, as compared with a configuration in which the color-producing sheet comprises the substrate 62 and the resin layer 63, which are the substrate used during production.

As described above, according to the above transfer foil, the following effects can be obtained.
(2-1) Because the color-producing sheet 61 does not comprise the substrate used to form the uneven structure of the multilayer film layer 16, the flexibility of the color-producing sheet 61 is increased. Therefore, the color-producing sheet 61 is likely to follow the surface of the adherend 71; thus, loads, such as heating or pressurization, applied to the color-producing sheet 61 when the color-producing sheet 61 is fixed to the adherend 71 can be reduced. Moreover, because the adhesion between the color-producing sheet 61 and the adherend 71 is increased, the color-producing sheet 61 is less likely to be removed from the adherend 71.
   With the form in which the multilayer film layer 16 constitutes the outermost surface of the color-producing sheet 61, it is possible to particularly minimize the thickness of the color-producing sheet 61. Moreover, with the form in which the multilayer film layer 16 is covered with the protective layer 90, and in which the protective layer 90 constitutes the outermost surface of the color-producing sheet 61, the uneven structure of the multilayer film layer 16 can be protected, and the deformation of the uneven structure can be suppressed. Therefore, desired coloring is suitably obtained in the color-producing sheet 61.
(2-2) Because the color-producing sheet 61 comprises the absorption layer 68, light transmitted through the multilayer film layer 16 is absorbed by the absorption layer 68, and the transmitted light is prevented from returning to the first surface 16F side. Therefore, when the color-producing sheet 61 is observed from the first surface 16F side, visual recognition of light in a wavelength band different from the reflected light from the multilayer film layer 16 is suppressed; thus, a reduction in the visibility of color due to the reflected light is suppressed. Further, because the color-producing sheet 61 comprises the absorption layer 68 separately from the adhesion layer 69, the degree of freedom to select the material of the adhesion layer 69 and to select the material of the absorption layer 68 is increased, as compared with a configuration in which the adhesion layer 69 has light absorption properties. Therefore, a high degree of freedom to control the adhesion of the adhesion layer 69 and the light absorption properties of the absorption layer 18 is obtained.
(2-3) When the absorption layer 68 is a layer containing a black pigment, the absorption layer 68 can absorb light in a wide wavelength band in the visible region. Therefore, in a configuration in which incident light is light in the visible region, the light transmitted through the multilayer film layer 16 is suitably absorbed. In addition, the absorption layer 68 containing a pigment can be suitably fixed to the multilayer film layer 16 through the anchor layer 67.
(2-4) The uneven structure of the multilayer film layer 16 provides an effect of diffusing reflected light, and light in a specific wavelength band is observed across a wide angular range as the reflected light from the multilayer film layer 16.
(2-5) According to the molding 80 comprising the above color-producing sheet 61, the flexibility of the color-producing sheet 61 is increased; thus, the degree of freedom for the shape of the surface of the adherend 71 to which the color-producing sheet 61 is fixed is increased. Moreover, a molding 80 in which the color-producing sheet 61 is less likely to be removed from the adherend 71 is realized.
(2-6) In the transfer foil 60, the release layer 65 is configured to be able to be peeled from the multilayer film layer 16; thus, after the adhesion layer 69 is attached to the adherend 71 to fix the transfer foil 60 to the adherend 71, the release layer 65 can be peeled from the multilayer film layer 16. Therefore, due to the use of the transfer foil 60, a color-producing sheet 61 that does not comprise the substrate used to form the uneven structure of the multilayer film layer 16, and that has high flexibility can be disposed on the adherend 71.
(2-7) When the release layer 65 is configured so that an uneven structure is formed in the resin layer 63 that covers the surface of the substrate 62, a nanoimprint method suitable for the formation of fine unevenness can be applied to the formation of the uneven structure. Further, with a configuration in which the resin layer 63 contains a mold release agent, a release layer 65 that can be peeled from the multilayer film layer 16 is suitably realized.
(2-8) According to the production method that forms the uneven structure of the release layer 65 using a nanoimprint method, a fine uneven structure can be suitably and easily formed.

As the color developing structure provided in the transfer foil, the color developing structure 32 described above can be used.

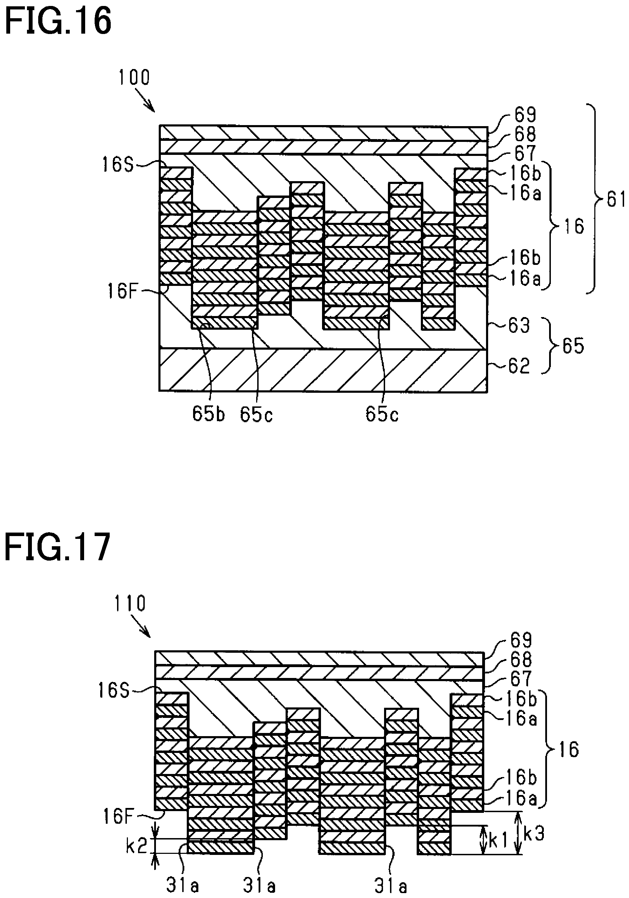

As shown in Fig. 16, the configuration of the uneven structure of the release layer 65 in the transfer foil 100, i.e., the uneven structure of the first surface 16F of the multilayer film layer 16, is different from the configuration of the uneven structure of the transfer foil 60 described above. Other than the configuration of such an uneven structure, the transfer foil 100 and the color-producing sheet 110 respectively have the same configurations as the transfer foil 60 and the color-producing sheet 61 described above.

As shown in Fig. 17, the uneven structure of the first surface 16F of the multilayer film layer 16 in the color-producing sheet 110 is constituted from unevenness reversed from the projections 15c and the recesses 15b of the unevenness of the release layer 65. That is, when viewed from the direction facing the first surface 16F, the pattern constituted from the recesses 31a of the first surface 16F is a pattern in which a pattern constituted from first recess elements reversed from the first projection elements 15Ea, and a pattern constituted from second recess elements reversed from the second projection elements 15Eb, are superimposed. The pattern constituted from the first recess elements, i.e., the pattern constituted from the projected images of the first recess elements in the direction facing the first surface 16F, has the same characteristics as the above first pattern regarding the width distribution of the rectangles R and the arrangement of the rectangles R. The pattern constituted from the second recess elements, i.e., the pattern constituted from the projected images of the second recess elements in the direction facing the first surface 16F, has the same characteristics as the above second pattern regarding the width and arrangement of the band regions.

The recess 31a has a multi-step shape in which the first recess element and the second recess element are arranged in the depth direction. In the region comprising only the first recess element, the depth k1 of the recess 31a is equal to the height h1 of the first projection element 15Ea. In the region in which the first recess element and the second recess element are superimposed, the depth k3 of the recess 31a is equal to the sum of the height h1 of the first projection element 15Ea and the height h2 of the second projection element 15Eb. In the region comprising only the second recess element, the depth k2 of the recess 31a is equal to the height h2 of the second projection element 15Eb.

The color-producing sheet 110 may comprise a protective layer 20 that cover the first surface 16F of the multilayer film layer 16.

As described above, according to the color-producing sheet 110, due to the synergy of a light diffusion phenomenon resulting from the portion constituted from the first recess elements in the recesses 31a, and a light diffraction phenomenon resulting from the portion constituted from the second recess elements, reflected light in a specific wavelength band can be observed across a wide angular range, and the intensity of this reflected light is increased; thus, glossy and vivid color is visually recognized.

According to the transfer foil 100 comprising the color developing structure 32, the following effect can be obtained, in addition to the above effects (2-1) to (2-8).
(2-9) The uneven structure of the multilayer film layer 16 provides a reflected light diffusion effect and a reflected light diffraction effect, and so light in a specific wavelength band can be observed across a wide angular range as the reflected light from the multilayer film layer 16, and the intensity of this reflected light is increased; thus, glossy and vivid color is visually recognized.

The transfer foils 60 and 100 described above can be modified in the following ways.

Because the resin layer 63 of the release layer 65 contains a mold release agent, the release layer 65 is configured to be able to be peeled from the multilayer film layer 16. In place of this configuration, the transfer foils 61 and 100 may further comprise a mold release layer, which is a layer that follows the uneven structure of the release layer 65 and that contains a mold release agent, between the release layer 65 and the multilayer film layer 16. The mold release layer is formed, for example, by applying a mold release agent to the resin layer 63 before the formation of the multilayer film layer 16. Peeling occurs on the interface between the release layer 65 and the mold release layer, or on the interface between the mold release layer and the multilayer film layer 16, whereby the release layer 65 is peeled from the multilayer film layer 16. When peeling occurs on the interface between the release layer 65 and the mold release layer, the color-producing sheets 61 and 110 comprise the mold release layer as the protective layer 90. For example, when the mold release layer is made of a resin containing fluorine, the release layer 65 can be peeled from the multilayer film layer 16 through the mold release layer. Further, after peeling of the release layer 65, the mold release layer exhibits an effect of suppressing adhesion of dirt, such as sebum, to the surface of the color-producing sheets 61 and 110 as the protective layer 90.

The release layer 65 may comprise only the substrate 62, and may have an uneven structure on the surface of the substrate 62. The uneven structure on the surface of the substrate 62 is formed, for example, using a known ultra-fine processing technology, such as lithography that applies light or a charged particle beam, or dry etching. The release layer 65 can be configured to be able to be peeled from the multilayer film layer 16, for example, by providing a mold release layer mentioned above on the substrate 62.

The release layer 65 may be configured to exhibit peeling properties against the multilayer film layer 16 based on the reception of physical external stimuli, such as heating or cooling. With such a configuration, peeling of the release layer 65 can be controlled by the presence of external stimuli or the timing of adding external stimuli. That is, peeling of the release layer 65 at an unintended timing is suppressed.

When the absorption layer 68 is configured to have light absorption properties to absorb at least part of light transmitted through the multilayer film layer 16, without absorbing all the light in the visible range, an effect of suppressing a reduction in the visibility of color due to the reflected light is obtained, as compared with a configuration in which a layer having such light absorption properties is not provided. For example, the absorption layer 68 may be a layer containing a pigment of color depending on the wavelength band of light transmitted through the multilayer film layer 16. However, when the absorption layer 68 is a black layer containing a black pigment, it is not necessary to, for example, control the color of the absorption layer 68 depending on the wavelength band of the transmitted light. Moreover, because the absorption layer 68 absorbs light in a wide wavelength band, a reduction in the visibility of color due to the reflected light is easily and suitably suppressed.

The color-producing sheets 61 and 110 may not have the adhesion layer 69 separately from the absorption layer 68, and the adhesion layer 69 may have light absorption properties to absorb at least part of light transmitted through the multilayer film layer 16. Even with such a configuration, visual recognition of light in a wavelength band different from the reflected light from the multilayer film layer 16 is suppressed when observed from the first surface 16F side. Accordingly, a reduction in the visibility of color due to the reflected light is suppressed. With a configuration in which the adhesion layer 69 has light absorption properties, the layer structure of the color-producing sheets 61 and 110 is facilitated, and the color-producing sheets 61 and 110 can be made thin, as compared with a configuration in which the color-producing sheets 61 and 110 comprise a layer having light absorption properties separately from the adhesion layer 69. When the absorption layer 68 is not provided, the color-producing sheets 61 and 110 may not comprise the anchor layer 67. That is, it is only necessary that the adhesion layer 69 covers the second surface 16S of the multilayer film layer 16.

The color-producing sheets 61 and 110 may not comprise a layer that absorbs at least part of light transmitted through the multilayer film layer 16. As a case where the color-producing sheets 61 and 110 are used, for example, it is assumed that the color-producing sheets 61 and 110 are used for applications for which high visibility of color due to the reflected light is not required. Moreover, as a case where the color-producing sheets 61 and 110 are used, it is assumed that the color-producing sheets 61 and 110 are used in such a manner that the light transmitted through the multilayer film layer 16 is prevented from returning to the first surface 16F side, for example, the color-producing sheets 61 and 110 are attached to the black surface of the adherend 71.

The protective layer 90 may not be a coating layer, and the protective layer 90 may be constituted from a plurality of layers.

The graphic that constitutes the pattern constituted from the projections 15a of the release layer 65, i.e., the pattern constituted from the recesses 11a of the multilayer film layer 16, is not limited to a rectangle. In other words, the graphic that constitutes the pattern constituted from the first projection elements or the first recess elements is not limited to a rectangle. The graphics that constitute these patterns may be ellipses or the like. In short, the graphic may be a shape element that has a shape in which the length along the second direction Dy is equal to or greater than the length along the first direction Dx. It is only necessary that the length d1 of the shape element in the first direction Dx and the length d2 in the second direction Dy satisfy the conditions described above in the first configuration.

The projections that constitute the uneven structure of the release layer 65 may have a configuration in which the width in the first direction Dx gradually decreases from the base portion toward the top. With such a configuration, the multilayer film layer 16 is easily formed on the projections. In this case, the length d1 and length d3 in the first direction Dx are specified by the pattern constituted from the bottom surface of the projection. That is, the recesses that constitute the uneven structure of the first surface 16F of the multilayer film layer 16 may have a configuration in which the width in the first direction Dx gradually increases from the bottom toward the opening. The length of the recesses in the first direction Dx is specified by a pattern constituted from the opening of the recess.

The anchor layer 67 and the absorption layer 68 can also be changed to the protective layer 20 described above, which is applied to the display. That is, the protective layer positioned between the multilayer film layer 16 and the adhesion layer 69 may contain an ultraviolet absorber. Further, in the protective layer positioned between the multilayer film layer 16 and the adhesion layer 69, the hardness measured from the surface of the protective layer can also be set to 0.03 GPa or more, as with the protective layer 20 described above. Moreover, in the protective layer positioned between the multilayer film layer 16 and the adhesion layer 69, the surface roughness Ra of the surface of the protective layer can also be set to 2 µm or less, as with the protective layer 20 described above. Furthermore, in the protective layer positioned between the multilayer film layer 16 and the adhesion layer 69, the water contact angle of the surface of the protective layer 20 can also be set to 60 degrees or more.

### [Reference Signs List]

- Dx ...: First direction
- Dy ...: Second direction
- 10, 11, 12 ...: Uneven structure
- 15 ...: Substrate
- 15a, 15c ...: Projection
- 15b ...: Recess
- 15Ea ...: First projection element
- 15Eb ...: Second projection element
- 16 ...: Multilayer film layer
- 16a ...: High refractive index layer
- 16b ...: Low refractive index layer
- 17 ...: Resin layer
- 20 ...: Protective layer
- 21 ...: Antireflection layer
- 22 ...: Adhesion layer
- 30, 31, 32, 33, 34 ...: Color developing structure
- 40 ...: Display
- 40F ...: Front surface
- 40R ...: Rear surface
- 41A, 41B ...: Display region
- 42A, 42B ...: Pixel
- 50 ...: Color-producing sheet
- 60 ...: Molding
- 61 ...: Adherend

## Claims

1. A color developing structure comprising:
an uneven layer having an uneven structure on a surface thereof; and
an optical functional layer containing a multilayer film layer positioned on the uneven structure and having a surface shape that follows the shape of the uneven structure, where layers adjacent in the multilayer film layer have different refractive indices, of incident light entering the multilayer film layer, the reflectance of light in a specific wavelength band is higher than the reflectance of light in wavelength bands other than the specific wavelength band, and an outermost layer of the optical functional layer on a side opposite to the uneven layer has a function to protect a layer lower than the outermost layer, wherein
a first direction and a second direction orthogonal to the first direction are directions along a virtual plane that is a virtual surface on which the uneven structure is projected in the thickness direction of the uneven layer,
projections that constitute the uneven structure have a shape with one or more steps, a pattern constituted from projected images of the projections in the virtual plane includes a pattern comprising a set of shape elements in which a length along the second direction is equal to or greater than a length along the first direction, and
the length of the shape elements along the first direction is equal to or less than sub-wavelength, and in the set of shape elements, the standard deviation of the length along the second direction is larger than the standard deviation of the length along the first direction.

2. The color developing structure according to claim 1, wherein the uneven layer has light transmittance for the incident light, and
a protective layer that covers the surface of the multilayer film layer as the outermost layer has light absorption properties to absorb, of the incident light, at least part of light transmitted through the multilayer film layer.

3. The color developing structure according to claim 1 or 2, wherein the layers that constitute the color developing structure include a layer containing an ultraviolet absorber.

4. The color developing structure according to any one of claims 1 to 3, wherein a protective layer that covers the surface of the multilayer film layer as the outermost layer is constituted from two or more layers.

5. The color developing structure according to any one of claims 1 to 4, wherein the hardness measured from the outermost surface of the color developing structure is 0.03 GPa or more.

6. The color developing structure according to any one of claims 1 to 5, wherein the arithmetic average roughness of the outermost surface of the color developing structure is 2 µm or less.

7. The color developing structure according to any one of claims 1 to 6, wherein the water contact angle of the outermost surface of the color developing structure is 60 degrees or more.

8. The color developing structure according to any one of claims 1 to 7, wherein
a pattern constituted from projected images of the projections in the virtual plane is a pattern comprising the set of shape elements, and
the projections that constitute the uneven structure have a constant height.

9. The color developing structure according to any one of claims 1 to 8, wherein
a pattern constituted from projected images of the projections in the virtual plane is a pattern in which a first pattern comprising the set of shape elements, and a second pattern comprising a plurality of band regions extending along the second direction and arranged along the first direction, are superimposed,
the arrangement intervals of the band regions along the first direction are not constant between the plurality of band regions, and the average value of the arrangement intervals is 1/2 or more of the minimum wavelength in wavelength bands contained in the incident light, and
the projections that constitute the uneven structure have a multi-step shape in which a projection element whose projected image in the virtual plane constitutes the first pattern and which has a predetermined height, and a projection element whose projected image in the virtual plane constitutes the second pattern and which has a predetermined height, are superimposed in the height direction.

10. The color developing structure according to any one of claims 1 to 9, wherein the uneven layer is configured to be able to be peeled from the multilayer film layer.

11. The color developing structure according to any one of claims 1 to 10, further comprising an adhesion layer that covers a surface of the optical functional layer on a side opposite to the uneven layer.

12. A display comprising a plurality of display elements, and having a front surface and a rear surface, wherein the display elements are each constituted from the color developing structure according to any one of claims 1 to 11.

13. A color-producing sheet constituted from the color developing structure according to any one of claims 1 to 11.

14. A molding comprising:
a color-producing sheet constituted from the color developing structure according to any one of claims 1 to 11; and
an adherend to which the color-producing sheet is fixed, wherein the adherend is positioned on a side on which the optical functional layer is positioned with respect to the uneven layer.

15. A method for producing a color developing structure, the method comprising:
a step of transferring unevenness of an intaglio plate to a resin using a nanoimprint method to thereby form an uneven layer having an uneven structure on a surface thereof; and
a step of forming an optical functional layer containing a multilayer film layer on the uneven structure, where layers adjacent in the multilayer film layer have different refractive indices, of incident light entering the multilayer film layer, the reflectance of light in a specific wavelength band is higher than the reflectance of light in wavelength bands other than the specific wavelength band, and an outermost layer of the optical functional layer on a side opposite to the uneven layer has a function to protect a layer lower than the outermost layer, wherein
a first direction and a second direction orthogonal to the first direction are directions along a virtual plane that is a virtual surface on which the uneven structure is projected in the thickness direction of the uneven layer,
in the step of forming the uneven layer, the uneven structure is formed so that a pattern constituted in the virtual plane from projected images of projections with one or more steps that constitute the uneven structure includes a pattern comprising a set of shape elements in which a length along the second direction is equal to or greater than a length along the first direction, and
the length of the shape elements along the first direction is equal to or less than sub-wavelength, and in the set of shape elements, the standard deviation of the length along the second direction is larger than the standard deviation of the length along the first direction.
